(19) Europäisches Patentamt
European Patent Office
Office européen des brevets

(11) **EP 3 241 281 B1**

(12) **FASCICULE DE BREVET EUROPEEN**

(45) Date de publication et mention
de la délivrance du brevet:
**26.09.2018 Bulletin 2018/39**

(51) Int Cl.:
*H04B 1/7163* (2011.01)    *G01S 13/02* (2006.01)
*G01S 7/32* (2006.01)    *G01S 7/292* (2006.01)

(21) Numéro de dépôt: **15817426.8**

(22) Date de dépôt: **30.12.2015**

(86) Numéro de dépôt international:
**PCT/EP2015/081423**

(87) Numéro de publication internationale:
**WO 2016/107905 (07.07.2016 Gazette 2016/27)**

(54) **PROCÉDÉ DE DÉSENTRELACEMENT DE SIGNAUX RADARS**

VERFAHREN ZUR ENTSCHACHTELUNG VON RADARSIGNALEN

METHOD FOR THE DEINTERLACING OF RADAR SIGNALS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.12.2014 FR 1403062**

(43) Date de publication de la demande:
**08.11.2017 Bulletin 2017/45**

(73) Titulaire: **Thales**
**92400 Courbevoie (FR)**

(72) Inventeurs:
• **STOFER, Daniel**
**78851 Elancourt Cedex (FR)**
• **GRANDIN, Jean-François**
**78851 Elancourt Cedex (FR)**
• **LEMOINE, Jean-Marie**
**78851 Elancourt Cedex (FR)**

(74) Mandataire: **Lavoix**
**2, place d'Estienne d'Orves**
**75441 Paris Cedex 09 (FR)**

(56) Documents cités:
**US-A1- 2011 150 053**

• **MARDIA H K: "NEW TECHNIQUES FOR THE
DEINTERLEAVING OF REPETITIVE
SEQUENCES", IEE PROCEEDINGS F.
COMMUNICATIONS, RADAR &
SIGNALPROCESSING, INSTITUTION OF
ELECTRICAL ENGINEERS. STEVENAGE, GB,
vol. 136, no. 4, PART F, 1 août 1989 (1989-08-01),
pages 149-154, XP000052595, ISSN: 0956-375X**
• **INABA T: "INTERFERENCE SUPPRESSION IN
FMICW RADAR WITH STAGGERED PULSE
REPETITION INTERVAL", ELECTRONICS &
COMMUNICATIONS IN JAPAN, PART I -
COMMUNICATIONS, WILEY, HOBOKEN, NJ, US,
vol. 90, no. 12, 1 décembre 2007 (2007-12-01),
pages 86-100, XP001542551, ISSN: 8756-6621**

**Description**

La présente invention concerne un procédé de désentrelacement de signaux radars selon le préambule de la revendication 1.

La présente invention concerne également un dispositif de désentrelacement associé.

L'un des enjeux de la guerre électronique consiste à intercepter les émissions radioélectriques en provenance de systèmes de détection tels que des émetteurs radar.

La présence de nombreux émetteurs fait que les signaux interceptés sont entrelacés, c'est-à-dire que les signaux émis par un émetteur radar d'intérêt sont brouillés par d'autres signaux émanant du milieu électromagnétique ambiant. Il convient donc de désentrelacer les signaux interceptés pour séparer les différents signaux émis par les différents émetteurs radars. Or, des signaux émis par un même émetteur radar peuvent avoir des caractéristiques, définissant une forme d'onde, variables, notamment en termes d'intervalle de répétition des impulsions des signaux ou de fréquence porteuse des impulsions des signaux, ce qui rend le processus de désentrelacement complexe.

A la grande richesse de formes d'ondes du monde électromagnétique correspond une grande variété de traitements de désentrelacement visant à extraire des impulsions d'une même forme d'onde du milieu électromagnétique ambiant. Plus particulièrement, le domaine technique, objet de ce procédé, concerne le désentrelacement des formes d'ondes dont l'intervalle de répétition des impulsions est moyen ou court (jusqu'à quelques centaines de micro-secondes). Ces formes d'ondes sont généralement constituées de plusieurs trains d'impulsions.

Il est connu d'utiliser des extracteurs de signaux radars mettant en oeuvre un processus de désentrelacement de signaux radars en deux étapes. La première étape consiste en la formation de trains d'impulsions à partir de l'ensemble des impulsions interceptées. La deuxième étape consiste à regrouper les trains d'impulsions formés pour obtenir des signaux radars désentrelacés.

La première étape de formation des trains d'impulsions exploite les informations statistiques des signaux interceptés telles que les fréquences des porteuses des impulsions des signaux, les intervalles de répétition des impulsions et les directions d'arrivée des impulsions.

La deuxième étape de regroupement des trains d'impulsions regroupe les trains d'impulsions formés suivant leur proximité pour former des signaux désentrelacés.

Néanmoins, les algorithmes existants de regroupement de trains d'impulsions n'offrent pas le même niveau de maturité que ceux de formation des trains d'impulsions. En particulier, l'étape de regroupement des trains d'impulsions est généralement abordée comme un problème de « clustering » ou de « classification de données », où chaque train est comparé à un autre selon un unique critère de distance. Pourtant, les formes d'ondes formées par les trains d'impulsions sont d'une grande diversité, certaines familles de formes d'ondes pouvant avoir des caractéristiques totalement antagonistes entre elles. Par conséquent, un critère de distance unique peut mener à la reconstruction de signaux erronés.

Le problème technique porte sur le regroupement de trains d'impulsions issus d'un même signal radar en environnement électromagnétique dense où plusieurs formes d'ondes distinctes peuvent apparaître simultanément, la difficulté consistant à ne pas effectuer de mauvais regroupements de trains d'impulsions.

US 2011/0150053 A décrit un procédé et un appareil de détection d'un signal radar. Le procédé comprend la collecte d'une pluralité d'impulsions basée sur un signal de référence. Le procédé comprend, également, la classification des impulsions dans des groupes en fonction de la similarité des largeurs d'impulsions.

L'article de MARDIA H.K. intitulé « New techniques for the deinterleaving of repetitive sequences » publié le 1er août 1989 dans IEE Proceedings F. Communications, Radar & Signal Processing, Institution of Electrical Engineers, volume 136, numéro 4, partie F, pages 149 à 154, décrit un algorithme pour désentrelacer rapidement et précisément plusieurs signaux répétitifs.

Il existe donc un besoin pour un procédé de désentrelacement de signaux radars permettant de regrouper des trains d'impulsions avec une meilleure fiabilité, en limitant les risques d'obtention d'un signal désentrelacé erroné, tout en étant de mise en oeuvre rapide.

A cet effet, l'invention a pour objet un procédé de désentrelacement de signaux radars du type précité, dans lequel le procédé comporte en outre les caractéristiques de la partie caractérisante de la revendication 1.

Suivant des modes particuliers de mise en oeuvre, le procédé de désentrelacement comprend une ou plusieurs des caractéristiques des revendications 2 à 11, prises isolément ou suivant toutes les combinaisons techniquement possibles.

L'invention concerne aussi un dispositif de désentrelacement de signaux radars selon la revendication 12.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une représentation schématique d'un dispositif de désentrelacement de signaux radars permettant la mise en oeuvre d'un procédé de désentrelacement selon l'invention,
- figure 2, un organigramme d'un exemple de mise en oeuvre d'un procédé de désentrelacement selon l'invention,

- figure 3, une représentation schématique de trois trains d'impulsions,
- figure 4, une représentation schématique d'un train d'impulsions et des grandeurs définissant ce train d'impulsions,
- figure 5, une représentation schématique d'un signal et d'un palier d'impulsions résultant du regroupement de trois trains d'impulsions de ce signal,
- figure 6, une représentation schématique illustrant le regroupement de deux trains d'impulsions lors d'une étape de regroupement du procédé de désentrelacement selon l'invention,
- figure 7, un organigramme du fonctionnement d'un algorithme mis en oeuvre au cours du procédé de désentrelacement selon l'invention,
- figure 8, une représentation schématique d'une phase d'élimination d'éléments incompatibles avec un groupe de référence,
- figure 9, une représentation schématique d'une phase de réunion d'un élément compatible avec un groupe de référence lorsque la distance entre l'élément et le groupe de référence est minimale par rapport aux autres éléments compatibles,
- figure 10, une représentation schématique d'un groupe de paliers d'impulsions formés à partir de paliers d'impulsions d'une forme d'onde de type FMICW,
- figure 11, une représentation schématique illustrant l'association de trois paliers d'impulsions pour former des groupes de paliers d'impulsions lors d'une autre étape d'association du procédé de désentrelacement selon l'invention,
- figure 12, une représentation schématique illustrant l'association de huit paliers d'impulsions pour former deux groupes de paliers d'impulsions lors d'une étape d'association du procédé de désentrelacement selon l'invention, et
- figure 13, une représentation schématique du processus de désentrelacement de signaux radars depuis la réception des signaux par un récepteur jusqu'à l'obtention de signaux désentrelacés.

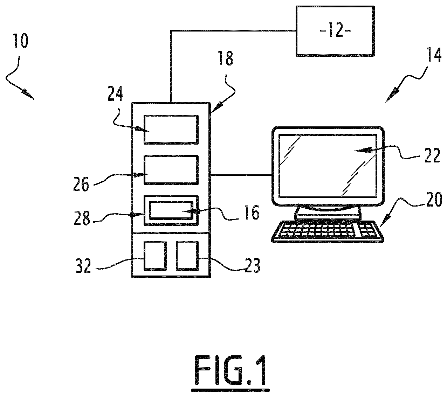

Un dispositif 10 de désentrelacement de signaux radars est représenté sur la figure 1. Le dispositif 10 de désentrelacement de signaux radars est propre à mettre en oeuvre un procédé de désentrelacement de signaux radars.

Les données en entrée du dispositif 10 de désentrelacement sont des mesures des caractéristiques des impulsions reçues par le dispositif 10. Les caractéristiques sont, par exemple, la fréquence porteuse des impulsions, la largeur des impulsions, la puissance des impulsions, la direction d'arrivée des impulsions ou les périodes de répétition des impulsions. De telles mesures caractéristiques d'impulsions sont issues, à titre d'exemple :

- de la réception de signaux radar par un récepteur, puis de la numérisation des signaux et de l'extraction des impulsions des signaux par une unité de traitement numérique du signal,
- de la réception de signaux analogiques créés en laboratoire simulant la réception de signaux radars, puis de la numérisation des signaux et de l'extraction des impulsions des signaux par une unité de traitement numérique du signal,
- de la génération, via un logiciel, de données numériques simulant la réception et la numérisation de signaux radar, et de l'extraction des impulsions des signaux par une unité de traitement numérique du signal, ou
- de la génération, via un logiciel, d'impulsions qui sont ensuite enregistrées sur une interface de réception.

Comme illustré sur la figure 1, le dispositif 10 comprend un récepteur 12 d'ondes électromagnétiques, un calculateur 14 et un support lisible d'informations 16 en interaction avec le calculateur 14.

Le récepteur 12 est propre à recevoir des signaux électromagnétiques émanant, par exemple, de systèmes de détection radioélectriques tels que des radars. Les signaux électromagnétiques sont, par exemple, issus d'émetteurs radars ou sont des signaux analogiques crées en laboratoire et simulant des signaux radars.

Le récepteur 12 est connecté au calculateur 14 et est propre à envoyer les signaux reçus par ce récepteur 12 au calculateur 14.

Le récepteur 12 est, par exemple, une antenne. A titre d'exemple, le récepteur 12 est une antenne élémentaire, une antenne en réseaux, une antenne à réflecteur, une antenne à polarisation circulaire, une antenne à guide d'onde, une antenne active, une antenne raccourcie, une antenne large bande, une antenne à patch, une antenne cadre ou une antenne boucle ou un système constitué d'une ou plusieurs des antennes précédentes.

Le calculateur 14 est propre à recevoir des signaux en provenance par exemple du récepteur 12 ou des données numériques en provenance de logiciels de simulation.

Le calculateur 14 est un ordinateur comportant un processeur 18 et, optionnellement, une interface homme-machine 20 et une unité d'affichage 22.

Le calculateur 14 comprend, en outre, une unité de traitement numérique du signal 23 et optionnellement une interface 32.

Le processeur 18 comprend une unité de traitement de données 24, des mémoires 26 et un lecteur 28 de support d'informations.

Le lecteur 28 de support d'informations est propre à recevoir et à lire le support lisible d'informations 16. Le lecteur 28 de support d'informations est relié à l'unité de traitement de données 24.Le support lisible d'informations 16 est un support lisible par le lecteur 28 de support d'informations. Le support lisible d'informations 16 est un médium adapté à mémoriser des instructions électroniques et capable d'être couplé à un bus d'un système informatique. A titre d'exemple, le support lisible d'informations 16 est une disquette ou disque souple (de la dénomination anglaise *floppy disc*), un disque optique, un CD-ROM, un disque magnéto-optique, une mémoire ROM, une mémoire RAM, une mémoire EPROM (acronyme de l'anglais *Erasable Programmable Read-Only Memory*), une mémoire EEPROM (acronyme de l'anglais *Electrically-Erasable Programmable Read-Only Memory*), une carte magnétique ou une carte optique.

Sur le support lisible d'informations 16 est mémorisé un produit programme d'ordinateur comprenant des instructions de programme. Le programme d'ordinateur est chargeable sur l'unité de traitement de données 24 et est adapté pour entraîner la mise en oeuvre d'un procédé de désentrelacement de signaux radars selon l'invention.

L'interface homme-machine 20 est, par exemple, un clavier.

L'unité d'affichage 22 est, par exemple, un écran.

L'unité de traitement numérique du signal 23 est configurée pour traiter numériquement les signaux reçus par le calculateur 14. Plus précisément, l'unité de traitement numérique du signal 23 est configurée pour numériser les signaux reçus, extraire les impulsions des signaux et mesurer les caractéristiques de chaque impulsion extraite.

En variante, l'unité de traitement numérique du signal 23 est également configurée pour générer des données numériques simulant la réception et la numérisation de signaux radars ou pour générer directement des impulsions.

L'interface 32 permet, d'une part de mémoriser des impulsions résultant du traitement numérique du signal effectué par l'unité de traitement numérique du signal 23 et d'autre part de recevoir des impulsions préalablement mémorisées ou de recevoir des impulsions générées par un logiciel de simulation.

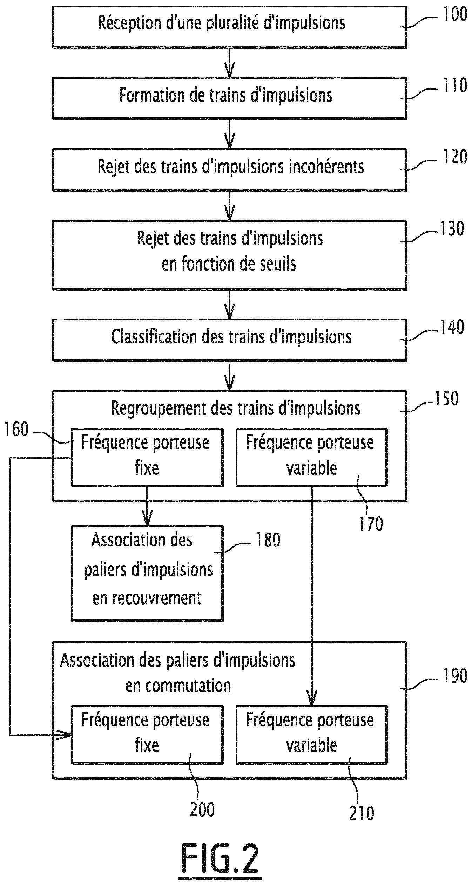

Le fonctionnement du dispositif de désentrelacement de signaux radars est maintenant décrit en référence à la figure 2 qui est un organigramme d'un exemple de mise en oeuvre d'un procédé de désentrelacement de signaux radars selon l'invention.

Le procédé de désentrelacement comprend une étape de réception 100 d'une pluralité de signaux électromagnétiques par le récepteur 12, de numérisation des signaux reçus et d'extraction des impulsions $I_1$, ..., $I_m$ électromagnétiques des signaux numérisés par traitement numérique du signal. La numérisation des signaux et l'extraction des impulsions $I_1$, ..., $I_m$ sont effectués par l'unité de traitement numérique du signal 23 et sont éventuellement enregistrées dans l'interface 32. De telles impulsions $I_1$, ..., $I_m$ électromagnétiques émanent ou sont représentatives, notamment, de signaux émis par des systèmes de étection radioélectriques tels que des radars.

En variante, les impulsions $I_1$, ..., $I_m$ sont déjà enregistrées dans l'interface 32.

Les étapes du procédé de désentrelacement décrites dans ce qui suit sont mises en oeuvre par le calculateur 14 en interaction avec le support lisible d'informations 16.

Le procédé de désentrelacement comprend ensuite une étape 110 de formation de trains d'impulsions $T_1$, ..., $T_n$ à partir des impulsions $I_1$, ..., $I_m$ reçues par le récepteur 12 ou enregistrées dans l'interface 32.

Lors de l'étape de formation 110, au moins trois impulsions $I_1$, $I_2$, $I_3$ sont regroupées pour former un train d'impulsions $T_x$. Le critère de formation des trains d'impulsions $T_1$, ..., $T_n$ consiste à regrouper dans un même train d'impulsions $T_x$, les impulsions $I_1$, ..., $I_m$ ayant un même intervalle de répétition des impulsions PRI. Il est entendu par le terme « intervalle de répétition des impulsions », la période séparant deux impulsions consécutives. En d'autres termes, les impulsions $I_1$, ..., $I_m$ regroupées dans un même train d'impulsions $T_x$ sont telles que deux impulsions consécutives quelconques du train d'impulsions $T_x$ sont espacées du même intervalle de répétition des impulsions PRI que deux autres impulsions consécutives quelconques du train d'impulsions $T_x$.

Les trains d'impulsions $T_1$, ..., $T_n$ formés constituent un ensemble $E_T$ de trains d'impulsions $T_1$, ..., $T_n$. Les trains d'impulsions $T_1$, ..., $T_n$ formés sont définis par l'intervalle de répétition des impulsions PRI séparant deux impulsions consécutives du train d'impulsions $T_1$, ..., $T_n$.

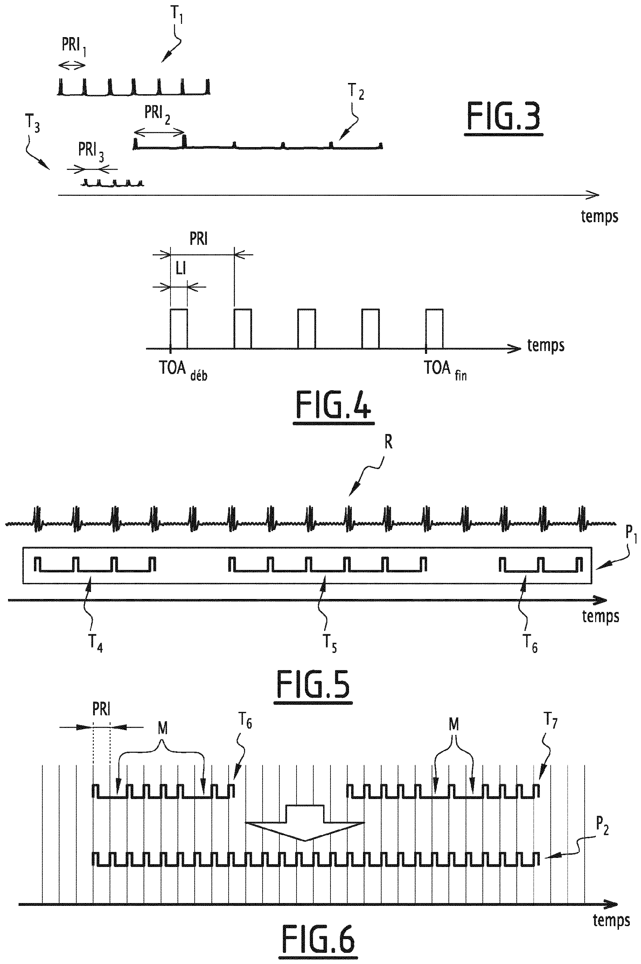

Il est illustré sur la figure 3, trois trains d'impulsions $T_1$, $T_2$ et $T_3$ ayant des intervalles de répétition des impulsions, $PRI_1$, $PRI_2$ et $PRI_3$, éventuellement différents les uns des autres.

Comme illustré sur la figure 4, un train d'impulsions $T_x$ est également défini par le temps d'arrivée de la première impulsion $I_1$ du train d'impulsions $T_x$, appelé $TOA_{déb}$ et le temps d'arrivée de la dernière impulsion $I_m$ du train d'impulsions $T_x$, appelé $TOA_{fin}$.

En outre, chaque train d'impulsions $T_x$ est éventuellement défini par au moins un élément choisi dans un groupe constitué de : la fréquence des impulsions $I_1$, ..., $I_m$ du train d'impulsions $T_x$, la durée des impulsions $I_1$, ..., $I_m$ du train d'impulsions $T_x$ et la direction d'arrivée des impulsions $I_1$, ..., $I_m$ du train d'impulsions $T_x$.

Le procédé de désentrelacement comprend ensuite une étape 120 de rejet des trains d'impulsions $T_1$, ..., $T_n$ incohérents.

L'étape de rejet 120 vérifie la cohérence en intervalle de répétition des impulsions PRI des trains d'impulsions $T_1$, ..., $T_n$ formés lors de l'étape de formation 110. En effet, certains trains d'impulsions $T_x$ peuvent avoir été formés par le mélange d'au moins deux intervalles de répétition des impulsions PRI proches mais néanmoins différents. Un train

d'impulsions $T_x$ incohérent en termes d'intervalle de répétition des impulsions PRI est, par exemple, détecté grâce à un test statistique se basant sur les intervalles séparant toutes les impulsions du train $T_x$. Un test du khi2 peut par exemple être utilisé. Les trains d'impulsions $T_x$ jugés incohérents en termes d'intervalle de répétition des impulsions PRI sont éliminés de l'ensemble $E_T$ de trains d'impulsions $T_1$, ..., $T_n$.

Au cours de cette étape de rejet 120, optionnellement, la cohérence des trains d'impulsions $T_1$, ..., $T_n$ en terme de fréquence porteuse des impulsions est également vérifiée. Il est entendu par le terme « fréquence porteuse d'une impulsion », la fréquence de la porteuse de l'impulsion, la porteuse étant une onde modulée par un signal d'entrée. En effet, certains trains d'impulsions $T_x$ peuvent avoir été formés par le mélange d'au moins deux fréquences porteuses proches mais néanmoins différentes. Un train d'impulsions $T_x$ incohérent en termes de fréquence porteuse est, par exemple, détecté grâce à un test statistique se basant sur les fréquences des impulsions du train $T_x$. Un test du khi2 peut par exemple être utilisé. Les trains d'impulsions $T_x$ jugés incohérents en terme de fréquence porteuse des impulsions sont éliminés de l'ensemble $E_T$ de trains d'impulsions $T_1$, ..., $T_n$.

Dans le cas où les intervalles de répétition des impulsions PRI, respectivement les fréquences porteuses des impulsions, sont modélisés comme des variables gaussiennes et indépendantes entre elles, la cohérence en intervalle de répétition des impulsions PRI, respectivement en fréquence porteuse des impulsions, est évaluée par un test statistique du khi deux. Il est entendu par l'expression « test du khi deux », abrégé en « test du $\chi^2$ », ou en « test du khi2 », un test statistique permettant de tester l'adéquation d'une série de données à une famille de lois de probabilités ou de tester l'indépendance entre deux variables aléatoires.

Le procédé de désentrelacement comprend ensuite une étape 130 de rejet des trains d'impulsions $T_x$ n'appartenant pas à la catégorie des formes d'ondes de type haute ou moyenne fréquence de récurrence. Une forme d'onde regroupe des trains d'impulsions $T_1$, ..., $T_n$ ayant des caractéristiques communes en terme, notamment, d'intervalle de répétition des impulsions PRI, de fréquence porteuse des impulsions et de nombre d'impulsions. Par exemple, l'ensemble des trains d'impulsions $T_1$, ..., $T_n$ ayant des intervalles de répétition des impulsions PRI courts et un grand nombre d'impulsions constitue une forme d'onde de type haute ou moyenne fréquence de récurrence. A l'inverse, l'ensemble $E_T$ des trains d'impulsions $T_1$, ..., $T_n$ ayant des intervalles de répétition des impulsions PRI élevé et un nombre d'impulsions faible constitue une autre forme d'onde de type basse fréquence de récurrence.

L'étape de rejet 130 comprend la définition de seuils caractéristiques d'une forme d'onde : un seuil d'intervalle de répétition des impulsions $S_{PRI}$ et un seuil de nombre d'impulsions $S_{Impulsions}$.

Le seuil d'intervalle de répétition des impulsions $S_{PRI}$ et le seuil de nombre d'impulsions $S_{Impulsions}$ sont définis à partir d'une base de données représentative d'un certain nombre de formes d'ondes radars d'intérêt. Dans une variante de réalisation, cette base de données de formes d'ondes est stockée dans la mémoire 26 du processeur 18. Dans une autre variante de réalisation, seuls les seuils déterminés à partir de la base de données sont stockés dans la mémoire 26 du processeur 18.

Le seuil $S_{PRI}$ est choisi de façon à être supérieur aux valeurs majoritairement observées dans la base de données de formes d'ondes. Le seuil d'intervalle de répétition des impulsions $S_{PRI}$ est, par exemple, compris au sens large entre 1 microsecondes ($\mu$s) et 1 millisecondes (ms) pour tester l'appartenance aux formes d'ondes de type haute ou moyenne fréquence de récurrence.

Le seuil $S_{Impulsions}$ est choisi de façon à être inférieur aux valeurs majoritairement observées dans la base de données de formes d'ondes. Le seuil de nombre d'impulsions $S_{Impulsions}$ est, par exemple, compris au sens large entre 1 impulsion et 100 impulsions pour tester l'appartenance aux formes d'ondes de type haute ou moyenne fréquence de récurrence. Dans ce cas, de tels seuils d'intervalle de répétition des impulsions $S_{PRI}$ et de nombre d'impulsions $S_{Impulsions}$ permettent d'exclure les trains d'impulsions $T_1$, ..., $T_n$ de type basse fréquence de récurrence.

L'étape de rejet 130 comprend ensuite le rejet des trains d'impulsions $T_1$, ..., $T_n$ dont l'intervalle de répétition des impulsions PRI est supérieur au seuil d'intervalle de répétition des impulsions $S_{PRI}$ L'étape de rejet 130 comprend également le rejet des trains d'impulsions $T_1$, ..., $T_n$ dont le nombre d'impulsions est inférieur au seuil de nombre d'impulsions $S_{Impulsions}$.

Le seuil d'intervalle de répétition des impulsions $S_{PRI}$ et le seuil de nombre d'impulsions $S_{Impulsions}$ forment ainsi un gabarit de sorte que tout train d'impulsions $T_x$ sortant de ce gabarit est rejeté. Ainsi, les trains d'impulsions $T_x$ rejetés sont retirés de l'ensemble $E_T$ de trains d'impulsions $T_1$, ..., $T_n$ et sont traités par la suite par un autre procédé de désentrelacement spécifique.

Le procédé de désentrelacement comprend ensuite une étape 140 de classification des trains d'impulsions $T_1$, ..., $T_n$.

L'étape de classification 140 consiste en un tri des trains d'impulsions $T_1$, ..., $T_n$ de l'ensemble $E_T$ de trains d'impulsions $T_1$, ..., $T_n$ suivant la fréquence porteuse des impulsions de chaque train d'impulsions $T_1$, ..., $T_n$.

Au cours de cette étape de classification 140, les trains d'impulsions $T_1$, ..., $T_n$ sont répartis en deux classes $C_1$, $C_2$ de trains d'impulsions $T_1$, ..., $T_n$. La première classe $C_1$ regroupe les trains d'impulsions $T_1$, ..., $T_n$ de fréquence porteuse fixe, c'est-à-dire les trains d'impulsions $T_1$, ..., $T_n$ formés d'impulsions ayant la même fréquence porteuse à une incertitude de mesure près. L'incertitude de mesure est, par exemple, égale à plus ou moins 5 pourcents (%) de la fréquence porteuse. Les trains d'impulsions $T_1$, ..., $T_n$ de fréquence porteuse fixe sont également appelés trains d'impulsions $T_1$, ..., $T_n$ mono-fréquence.

La deuxième classe $C_2$ de trains d'impulsions $T_1$, ..., $T_n$ regroupe les trains d'impulsions $T_1$, ..., $T_n$ de fréquence porteuse variable, c'est-à-dire les trains d'impulsions $T_1$, ..., $T_n$ formés d'impulsions de fréquences porteuses différentes. Les trains d'impulsions $T_1$, ..., $T_n$ de fréquence porteuse variable sont également appelés trains d'impulsions $T_1$, ..., $T_n$ agiles en fréquence. La fréquence porteuse des impulsions des trains d'impulsions $T_1$, ..., $T_n$ agiles en fréquence est généralement aléatoire ou pseudo aléatoire.

Le procédé de désentrelacement comprend, ensuite, une étape 150 de regroupement des trains d'impulsions $T_1$, ..., $T_n$ de l'ensemble $E_T$ de trains d'impulsions $T_1$, ..., $T_n$.

Lors de l'étape de regroupement 150, les trains d'impulsions $T_1$, ..., $T_n$ ayant un même intervalle de répétition des impulsions PRI sont regroupés suivant au moins une loi de regroupement prédéfinie pour former des paliers d'impulsions $P_1$, ..., $P_p$.

Il est entendu par l'expression « palier d'impulsions », un ensemble d'impulsions appartenant à au moins un train d'impulsions formé lors de l'étape de regroupement 150.

Il est illustré sur la figure 5, un exemple de signal reçu R par le récepteur 12 et un palier d'impulsions $P_1$ formé par le regroupement de trains d'impulsions $T_4$, $T_5$ et $T_6$ de ce signal. De même, il est illustré sur la figure 6, un palier d'impulsions $P_2$ issu du regroupement des trains d'impulsions $T_6$ et $T_7$.

Plus précisément, l'étape 150 de regroupement des trains d'impulsions $T_1$, ..., $T_n$ est mise en oeuvre, d'une part, pour les trains d'impulsions $T_1$, ..., $T_n$ de fréquence porteuse fixe lors d'une première sous-étape 160 pour obtenir des paliers d'impulsions $P_1$, ..., $P_p$ de fréquence porteuse fixe. La loi de regroupement utilisée est appelée « loi de regroupement fixe ». L'étape 150 de regroupement des trains d'impulsions $T_1$, ..., $T_n$ est mise en oeuvre, d'autre part, pour les trains d'impulsions $T_1$, ..., $T_n$ de fréquence porteuse variable lors d'une deuxième sous-étape 170 pour obtenir des paliers d'impulsions $P_1$, ..., $P_p$ de fréquence porteuse variable. La loi de regroupement utilisée est appelée « loi de regroupement variable ».

Les trains d'impulsions $T_1$, ..., $T_n$ regroupés lors de l'étape de regroupement 150 n'ont pas été mis ensemble pour former un seul train d'impulsions $T_1$, ..., $T_n$ lors de l'étape de formation 110 car de tels trains d'impulsions $T_1$, ..., $T_n$ présentaient, par exemple, des mitages M, c'est-à-dire des impulsions manquantes, du fait de raisons techniques. Ces raisons techniques dépendent notamment de limitations d'écoute du récepteur 12, de la qualité des mesures par l'unité de traitement numérique du signal 23, de la proximité du récepteur 12 par rapport à l'émetteur, du positionnement du récepteur 12 par rapport à l'émetteur et de perturbations électromagnétiques.

Les mitages sont, par exemple, représentés sur les trains d'impulsion $T_6$ et $T_7$. Les impulsions manquantes sont reconstituées lors de la formation du palier d'impulsions $P_2$.

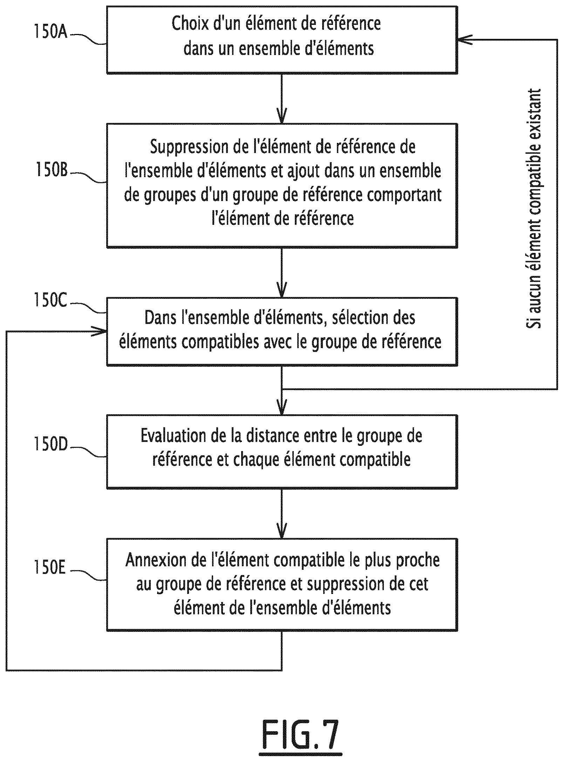

De manière générale, une loi de regroupement consiste en un algorithme dont la structure générale est décrite en référence à la figure 7.

Initialement, l'algorithme comprend une phase 150A de choix d'un élément de référence $e_{réf}$ parmi un ensemble d'éléments E.

L'algorithme comprend, ensuite, une phase 150B de suppression de l'élément de référence $e_{réf}$ de l'ensemble d'éléments E et d'ajout, dans un ensemble de groupes $E_g$, d'un groupe de référence $g_{réf}$ comportant l'élément de référence $e_{réf}$.

L'algorithme comprend, ensuite, une phase 150C de sélection dans l'ensemble d'éléments E, des éléments compatibles avec le groupe de référence $g_{réf}$ selon un ensemble de critères C. Les éléments compatibles avec le groupe de référence $g_{réf}$ forment un ensemble d'éléments candidats $E_c$. Les critères C sont, par exemple, choisis d'après des statistiques sur les caractéristiques de formes d'ondes radars de la base de données de formes d'ondes.

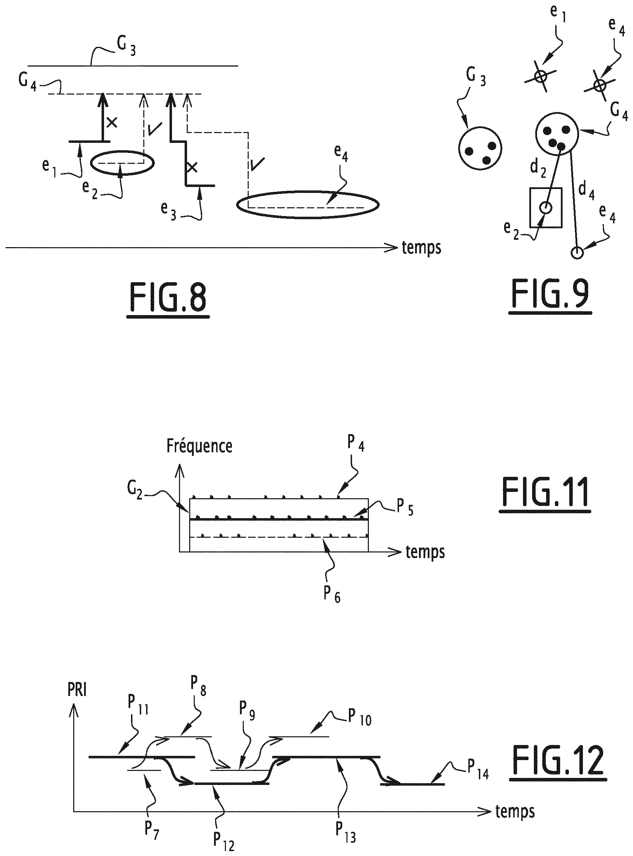

Par exemple, la figure 8 illustre un groupe $G_3$ déjà formé et un groupe $G_4$ en cours de formation qui est donc à ce stade le groupe de référence $g_{réf}$ de l'algorithme. Les éléments $e_1$, $e_2$, $e_3$ et $e_4$ sont les éléments de l'ensemble d'éléments E de l'algorithme. Comme illustré par une croix sur cette figure 8, les éléments $e_1$ et $e_3$ sont incompatibles avec le groupe $G_4$ en formation. A l'inverse, comme illustré par une coche sur cette figure 8, les éléments $e_2$ et $e_4$ sont compatibles pour être réunis avec le groupe $G_4$ en formation. L'ensemble des éléments candidats $E_c$ de l'algorithme comprend donc deux éléments : $e_2$ et $e_4$.

L'algorithme comprend, ensuite, une phase 150D d'évaluation de la distance entre le groupe de référence $g_{réf}$ et chaque élément de l'ensemble d'éléments candidats $E_c$.

Puis, l'algorithme comprend une phase 150E d'annexion d'un élément de l'ensemble d'éléments candidats $E_c$ au groupe de référence $g_{réf}$. L'élément annexé est retiré de l'ensemble d'éléments E. L'élément de l'ensemble d'éléments candidats $E_c$ réuni avec le groupe de référence $g_{réf}$ est l'élément ayant la plus petite distance d. Il est entendu par l'expression « annexion d'un élément à un groupe », le rattachement de l'élément au groupe : à l'issue de l'annexion le groupe final est formé du groupe initial et de l'élément annexé qui est donc réuni au groupe initial.

Par exemple, la figure 9 illustre la détermination de l'élément à réunir au groupe de référence $g_{réf}$, c'est-à-dire au groupe $G_4$ en formation, parmi l'ensemble d'éléments candidats $E_c$. La figure 9 comprend les mêmes groupes et éléments que ceux de la figure 8, mais représentés de manière différente. Ainsi, le groupe $G_3$ déjà formé comprend trois éléments représentés par trois ronds. Le groupe $G_4$ en cours de formation comprend déjà quatre éléments représentés par quatre ronds. Comme visible sur la figure 9, la distance $d_2$ séparant l'élément $e_2$ du groupe $G_4$ est inférieure à la distance $d_4$ séparant l'élément $e_4$ du groupe $G_4$. Par conséquent, l'élément de l'ensemble d'éléments candidats $E_c$ qui minimise la distance avec le groupe de référence $g_{réf}$ est l'élément $e_4$. L'élément $e_4$ sera donc réuni avec le groupe $G_4$ en formation.

Les phases de sélection d'éléments compatibles 150C, d'évaluation de distance 150D et d'annexion 150E sont, ensuite, répétées avec les éléments restant de l'ensemble d'éléments E, tant que l'ensemble des éléments candidats $E_c$ calculé à la phase de sélection d'éléments compatibles 150C, comporte des éléments.

Enfin, les phases de choix 150A, de suppression et d'ajout 150B, de sélection d'éléments compatibles 150C, d'évaluation de distance 150D, et d'annexion 150E sont répétées tant que l'ensemble d'éléments E comporte des éléments.

La loi de regroupement fixe appliquée lors de la première sous-étape 160 est décrite de manière spécifique dans ce qui suit.

Chaque élément de l'algorithme est un train d'impulsions $T_1$, ..., $T_n$ de la première classe $C_1$ des trains d'impulsions $T_1$, ..., $T_n$ de fréquence porteuse fixe et chaque groupe de l'algorithme est un palier d'impulsions $P_1$, ..., $P_p$ de fréquence porteuse fixe. Le groupe de référence $g_{réf}$ de l'algorithme est un palier d'impulsions $P_1$, ..., $P_p$. En outre, l'ensemble d'éléments E initial de l'algorithme est l'ensemble des trains d'impulsions $T_1$, ..., $T_n$ de la première classe $C_1$ des trains d'impulsions $T_1$, ..., $T_n$ de fréquence porteuse fixe.

Lors de la phase de choix 150A, l'élément choisi parmi l'ensemble d'éléments E est l'élément dont le temps d'arrivée de la première impulsion est le plus petit. En d'autres termes, l'élément choisi est l'élément de l'ensemble d'éléments E arrivant le premier sur le récepteur 12 ou encore l'élément enregistré sur l'interface 32 avec le temps d'arrivée de la première impulsion TOA le plus petit.

L'ensemble de critères C comprend les critères suivants : un critère de direction d'arrivée, un critère temporel, un critère fréquentiel, un critère de largeur d'impulsion, un critère d'intervalle de répétition des impulsions et un critère de phase.

Seuls les éléments de l'ensemble d'éléments E vérifiant l'intégralité des critères de l'ensemble de critères C sont compatibles avec le groupe de référence $g_{réf}$ et sont ajoutés dans l'ensemble d'éléments candidats $E_c$.

En variante, l'ensemble de critères C ne comprend pas l'intégralité des critères énoncés ou comprend des critères différents de ceux énoncés.

Le critère de direction d'arrivée permet de tester la compatibilité de chaque élément de l'ensemble d'éléments E avec le groupe de référence $g_{réf}$ en fonction de leur direction d'arrivée DOA. Le critère de direction d'arrivée stipule que pour être compatibles, le groupe de référence $g_{réf}$ et l'élément doivent être formés d'impulsions ayant la même direction d'arrivée DOA.

Le critère de direction d'arrivée est vérifié pour un élément de l'ensemble d'éléments E lorsque l'élément vérifie un test de comparaison des directions d'arrivées DOA de l'élément et du groupe de référence $g_{réf}$. Le test de comparaison se base sur un modèle statistique de la direction d'arrivée DOA et est adapté pour prendre en compte la proportion de valeurs aberrantes. Pour vérifier le test de comparaison, l'élément de l'ensemble d'éléments E doit vérifier l'équation $eq_1$ suivante :

$$(DOA_1 - DOA_2)^2 \lesseqgtr 2 * \frac{\sigma^2}{1 - 2r} * \frac{\pi}{2} * \left(\frac{1}{n_1} + \frac{1}{n_2}\right) * \mathrm{erf}^{-1}\big(P(H_o | H_o)\big)$$

où $DOA_1$ est la direction d'arrivée du groupe de référence $g_{réf}$,

$DOA_2$ est la direction d'arrivée de l'élément de l'ensemble d'éléments E à tester,

$\sigma^2$ est la variance de la direction d'arrivée des impulsions

$r$ est la proportion de mesures de direction d'arrivée dégradées,

$n_1$ est le nombre d'impulsions présentes dans le groupe de référence $g_{réf}$,

$n_2$ est le nombre d'impulsions présentes dans l'élément de l'ensemble d'éléments E à tester,

$\mathrm{erf}^{-1}$ est la réciproque de la fonction d'erreur, la fonction d'erreur étant donnée par l'équation $\mathrm{erf}(x) = \frac{2}{\sqrt{\pi}} \int_0^x e^{-t^2} dt$, et

$P(H_o | H_o)$ est la probabilité de détection d'égalité entre $DOA_1$ et $DOA_2$, $H_o$ désignant l'hypothèse que les valeurs $DOA_1$ et $DOA_2$ soient égales, et $P(H_o | H_o)$ désignant la probabilité de faire le choix $H_o$ sachant que l'on est dans le cas $H_o$.

En variante, un autre test de comparaison consiste à calculer, puis à comparer, la direction d'arrivée DOA moyenne des impulsions du groupe de référence $g_{réf}$ par rapport à la direction d'arrivée DOA moyenne des impulsions de chaque élément de l'ensemble d'éléments E.

En variante, encore un autre test de comparaison consiste à calculer, puis à comparer, la direction d'arrivée DOA médiane des impulsions du groupe de référence $g_{réf}$ par rapport à la direction d'arrivée DOA médiane des impulsions de chaque élément de l'ensemble d'éléments E. L'emploi de la médiane et non pas de la moyenne permet d'éviter la prise en compte de données aberrantes fortement présentes dans les mesures de directions d'arrivée DOA.

Le critère temporel permet de tester la compatibilité temporelle de chaque élément de l'ensemble d'éléments E avec le groupe de référence $g_{réf}$. Le critère temporel stipule qu'un élément de l'ensemble d'éléments E qui se superpose en temps avec le groupe de référence $g_{réf}$ est incompatible avec le groupe de référence $g_{réf}$. Le critère temporel stipule, en outre, qu'un écart en temps trop important entre un élément de l'ensemble d'éléments E et le groupe de référence $g_{réf}$ entraîne également une incompatibilité de l'élément avec le groupe de référence $g_{réf}$. En effet, un écart en temps important entre le groupe de référence $g_{réf}$ et l'élément peut signifier qu'il n'y a pas eu d'impulsions émises. Dans ce cas, le groupe de référence $g_{réf}$ et l'élément, même s'ils appartiennent au même émetteur, sont distincts.

L'écart en temps maximal séparant le groupe de référence $g_{réf}$ d'un élément compatible de l'ensemble d'élément E est, par exemple, un multiple de l'intervalle de répétition des impulsions PRI moyen du groupe de référence $g_{réf}$. L'écart en temps maximal est, par exemple, égal à vingt fois la valeur moyenne de l'intervalle de répétition des impulsions PRI du groupe de référence $g_{réf}$. La valeur du multiple est fixée de manière empirique ou à partir de la base de données de formes d'ondes. En variante, d'autres valeurs de multiples ou d'autres valeurs de seuils ne dépendant pas de l'intervalle de répétition des impulsions PRI peuvent encore être envisagées.

Le critère fréquentiel permet de tester la compatibilité fréquentielle des éléments de l'ensemble d'éléments E avec le groupe de référence $g_{réf}$. Le critère fréquentiel stipule que pour être compatibles deux éléments doivent être formés d'impulsions ayant la même fréquence porteuse f. Le critère fréquentiel est donc vérifié pour un élément de l'ensemble d'éléments E lorsque l'élément vérifie un test de comparaison des fréquences porteuses des impulsions de l'élément avec les fréquences porteuses des impulsions du groupe de référence $g_{réf}$.

Le test de comparaison consiste à comparer la fréquence porteuse moyenne des impulsions du groupe de référence $g_{réf}$ par rapport à la fréquence porteuse moyenne des impulsions de chaque élément de l'ensemble d'éléments E. Un tel test de comparaison repose sur le fait qu'une mesure de fréquence suit un modèle gaussien de variance connue. Néanmoins, dans l'hypothèse où les mesures de fréquence porteuses sont obtenues en s'aidant de fenêtres fréquentielles, les possibilités d'exclusion de certaines valeurs fréquentielles sont à prévoir. Dans ce cas, la distribution des fréquences porteuses mesurées n'est plus gaussienne, car partiellement tronquée, et dès lors la comparaison des moyennes est biaisée.

En variante, notamment dans le cas où la distribution des fréquences n'est plus gaussienne, un test du $\chi^2$ est utilisé. Pour vérifier le critère fréquentiel, l'élément de l'ensemble d'éléments E doit vérifier l'équation $eq_2$ suivante :

$$\sum_{i=0}^{n_1} f_{1,i}^2 + \sum_{i=0}^{n_2} f_{2,i}^2 - \frac{\left(\sum f_{1,i}^2 + \sum f_{2,i}^2\right)^2}{n_1 + n_2} \lessgtr \sigma_f^2 * \chi_{n_1+n_2-1,P(H_o|H_o)}^2$$

où $f_{1,i}$ est la fréquence porteuse de l'impulsion d'ordre i du groupe de référence $g_{réf}$,

$f_{2,i}$ est la fréquence porteuse de l'impulsion d'ordre i de l'élément de l'ensemble d'éléments E à comparer,

$n_1$ est le nombre d'impulsions du groupe de référence $g_{réf}$,

$n_2$ est le nombre d'impulsions de l'élément de l'ensemble d'éléments E à comparer,

$\sigma_f^2$ est la variance de la distribution des mesures de fréquence porteuse des impulsions,

$\chi_{v,p}^2$ est le quantile $x_p$ pour la probabilité p de la distribution du khi2 à v degrés de liberté, c'est à dire que si une variable aléatoire X suit une loi du khi2 à v degrés de liberté, la probabilité d'avoir $X \leq x_p$ est p, et

$P(H_o|H_o)$ est la probabilité de détection d'égalité entre $\sum_{i=0}^{n_1} f_{1,i}^2$ et $\sum_{i=0}^{n_2} f_{2,i}^2$, $H_o$ désignant l'hypothèse que les deux valeurs de fréquence soient égales, et $P(H_o|H_o)$ désignant la probabilité de faire le choix $H_o$ sachant que l'on est dans le cas $H_o$,

Le critère de largeur d'impulsion permet de tester la compatibilité en largeur d'impulsion LI des éléments de l'ensemble d'éléments E avec le groupe de référence $g_{réf}$. Le critère de largeur d'impulsion stipule que pour être compatibles le groupe de référence $g_{réf}$ et l'élément doivent être formés d'impulsions ayant la même largeur d'impulsion. Comme illustrée sur la figure 4, la largeur d'impulsion LI d'une impulsion est la durée de l'impulsion.

Le critère de largeur d'impulsion est vérifié pour un élément de l'ensemble d'éléments E lorsque les largeurs d'impulsions LI des impulsions de l'élément sont du même ordre de grandeur que les largeurs d'impulsions LI des impulsions du groupe de référence $g_{réf}$. Il est entendu par le terme « même ordre de grandeur », un écart relatif moindre qu'un seuil déterminé à partir de la base de données de formes d'ondes, ou valant par exemple 50%.

Le critère d'intervalle de répétition des impulsions PRI permet de tester la compatibilité de l'intervalle de répétition des impulsions PRI de chaque élément de l'ensemble d'éléments E avec le groupe de référence $g_{réf}$. Le critère d'intervalle de répétition des impulsions PRI stipule que les impulsions de chaque élément d'un même groupe doivent avoir le même intervalle de répétition des impulsions PRI. Le critère d'intervalle de répétition des impulsions PRI est vérifié pour un élément de l'ensemble d'éléments E lorsque l'élément vérifie un test de comparaison de l'intervalle de répétition des impulsions PRI de l'élément avec l'intervalle de répétition des impulsions PRI du groupe de référence $g_{réf}$.

Le test de comparaison consiste en premier lieu à estimer, pour chaque élément de l'ensemble d'éléments E, l'intervalle de répétition des impulsions PRI théorique issu de la réunion des impulsions de l'élément avec les impulsions du groupe de référence $g_{réf}$. L'intervalle de répétition des impulsions PRI théorique est estimé, par exemple, par la méthode de Fourier ou par la méthode des moindres carrés. Le test de comparaison consiste, ensuite, à effectuer un test d'adéquation pour vérifier, par exemple, si la somme des erreurs quadratiques est supérieure ou inférieure à un seuil. Le test d'adéquation est par exemple un test du $\chi^2$. Ce test de comparaison présente l'avantage de déterminer, en outre, l'intervalle de répétition des impulsions PRI du groupe obtenu lorsque l'élément de l'ensemble d'éléments E est réuni avec le groupe de référence $g_{réf}$. Cependant, un tel test de comparaison est relativement lent et consommateur de ressources.

En variante est présentée un test de comparaison moins long et moins consommateur de ressources. Pour vérifier le critère d'intervalle de répétition des impulsions PRI, l'élément de l'ensemble d'éléments E doit vérifier l'équation $eq_3$ suivante :

$$(PRI_1 - PRI_2)^2 \lesseqgtr 4 * \sigma_{TOA}^2 * (\text{erf}^{-1}(P_d))^2$$

où $PRI_1$ est l'intervalle de répétition des impulsions du groupe de référence $g_{réf}$,
$PRI_2$ est l'intervalle de répétition des impulsions de l'élément de l'ensemble d'éléments E à comparer,
$\sigma_{TOA}^2$ est la variance de la distribution des mesures du temps d'arrivée des impulsions TOA,
$\text{erf}^{-1}$ est la réciproque de la fonction d'erreur, et
$P_d$ est est la probabilité de détection d'égalité de deux valeurs de PRI.

En variante, si les précisions des intervalles de répétition des impulsions de chaque élément ont été estimées, encore un autre test est proposé. Pour vérifier le critère d'intervalle de répétition des impulsions PRI, l'élément de l'ensemble d'éléments E doit vérifier l'équation $eq_4$ suivante :

$$(PRI_1 - PRI_2)^2 \lesseqgtr 2 * (var(PRI_1) + var(PRI_2)) * (\text{erf}^{-1}(P_d))^2$$

où $var(PRI_1)$ est la variance de l'intervalle de répétition des impulsions du groupe de référence $g_{réf}$,
$var(PRI_2)$ est la variance de l'intervalle de répétition des impulsions de l'élément de l'ensemble d'éléments E à comparer,
et les autres notations sont celles de l'équation $eq_3$.

Le critère d'intervalle de répétition des impulsions tient également compte du fait que certains paliers peuvent avoir des impulsions manquantes et que par conséquent l'intervalle de répétition des impulsions PRI mesuré est susceptible d'être un multiple de l'intervalle de répétition des impulsions PRI réel.

Ainsi, le critère d'intervalle de répétition des impulsions PRI compare également les multiples des intervalles de répétition des impulsions de chaque élément de l'ensemble d'éléments E avec l'intervalle de répétition des impulsions PRI du groupe de référence $g_{réf}$, et inversement. Par exemple, le test de comparaison compare l'intervalle de répétition des impulsions PRI du groupe de référence $g_{réf}$ avec respectivement deux fois, trois fois, quatre fois, l'intervalle de répétition des impulsions PRI de chaque élément de l'ensemble d'éléments E ou encore l'intervalle de répétition des impulsions PRI de chaque élément de l'ensemble d'éléments E avec respectivement deux fois, trois fois, quatre fois, l'intervalle de répétition des impulsions PRI du groupe de référence $g_{réf}$. Le nombre de multiples à comparer dépend des conditions d'écoute et du pourcentage de mitage M des éléments. Néanmoins, trois est une limite de multiple raisonnable. Il est, en effet, peu probable qu'un élément mité conserve une impulsion sur quatre à intervalle régulier.

Le critère de phase permet de tester la compatibilité en phase des temps d'arrivée des impulsions de chaque élément de l'ensemble d'éléments E avec le groupe de référence $g_{réf}$.

Les phases en temps d'arrivée des impulsions de deux éléments ont été préalablement calculées par rapport à un temps de référence $t_{ref}$. Cependant, si le temps de référence $t_{ref}$ est éloigné de la position temporelle des éléments à comparer, cela peut s'avérer problématique pour la comparaison. D'un point de vue mathématique, la précision de la phase en temps d'arrivée des impulsions est obtenue par la méthode des moindres carrés ou encore par la méthode de Fourier. La précision de la phase en temps d'arrivée des impulsions vérifie l'équation $eq_5$ suivante :

$$var\hat{\varphi} = \frac{\sum k_i^2}{n \sum k_i^2 - (\sum k_i)^2} * \sigma_{TOA}^2$$

où $\hat{\varphi}$ est l'estimée de la phase en fonction du temps d'arrivée des impulsions,

$k_i$ est le rang ou l'ordre de l'impulsion i par rapport au temps zéro tel que $k_i = \left[\frac{t_i + \frac{1}{2}}{PRI}\right]$

avec $t_i$ le temps d'arrivée de l'impulsion i et PRI l'intervalle de répétition des impulsions et [ ] désignant la partie entière, n est le nombre d'impulsions du groupe obtenu, et

$\sigma_{TOA}^2$ est la variance de la distribution des mesures du temps d'arrivée des impulsions TOA.

De l'équation $eq_5$, il est possible de montrer que la précision de la phase est meilleure, c'est-à-dire, plus petite, quand les ordres des impulsions sont faibles, c'est-à-dire quand le temps de référence $t_{ref}$ est proche de la position temporelle de l'élément.

Le critère de phase suppose que les deux éléments à comparer vérifient en premier lieu le critère d'intervalle de répétition des impulsions PRI. Si tel n'est pas le cas, le groupe de référence $g_{réf}$ et l'élément sont incompatibles en phase. Le critère de phase est vérifié pour un élément de l'ensemble d'éléments E lorsque l'élément vérifie un test de comparaison des phases de l'élément et du groupe de référence $g_{réf}$.

Le test de comparaison comporte en premier lieu la détermination d'un nouveau temps de référence $t_{ref}$, qui sera positionné au centre du la position temporelle des deux éléments à comparer. Le test de comparaison comprend ensuite le calcul des phases du groupe de référence $g_{réf}$ et de l'élément dans ce nouveau temps de référence $t_{ref}$. Enfin, l'élément de l'ensemble d'éléments E est compatible avec le groupe de référence $g_{réf}$ lorsqu'il vérifie l'équation $eq_6$ suivante :

$$\left(\varphi'_{toa,1} - \varphi'_{toa,2}\right)^2 \lesseqqgtr 2\left(var(\hat{\varphi}'_{toa,1}) + var(\widehat{\varphi}'_{toa,2})\right) * \left(\mathrm{erf}^{-1}\left(P(H_0|H_0)\right)\right)^2$$

où

$$\varphi'_{toa,1} = \left(\varphi_{toa,1} - t_{ref}\right) * mod(PRI_1)$$

et

$$\varphi'_{toa,2} = \left(\varphi_{toa,2} - t_{ref}\right) * mod(PRI_2),$$

où

$t_{ref} = \frac{toa_{fin,1} + toa_{deb,2}}{2}$ est la moyenne entre le temps d'arrivée de la dernière impulsion du groupe de référence $g_{réf}$ et le temps d'arrivée de la première impulsion de l'élément de l'ensemble d'éléments E à comparer,

(x)mod(y) indique que l'on calcule un modulo en retranchant y autant de fois que nécessaire à x pour que (x)mod(y) soit compris entre 0 et y,

$\varphi_{toa,1}$ est la phase en temps d'arrivée des impulsions TOA du groupe de référence $g_{réf}$,

$\varphi_{toa,2}$ est la phase en temps d'arrivée des impulsions TOA de l'élément de l'ensemble d'éléments E à comparer,

*var* désigne la variance,

où $erf^{-1}$ est la réciproque de la fonction d'erreur,

et où $P(H_o|H_o)$ est la probabilité de détection d'égalité entre les phases, $H_o$ désignant l'hypothèse que les phases soient égales, et $P(H_o|H_o)$ désignant la probabilité de faire le choix $H_o$ sachant que l'on est dans le cas $H_o$

Encore en variante, notamment lorsque les données de variance ne sont pas accessibles, l'élément de l'ensemble d'éléments E est déclaré compatible avec le groupe de référence $g_{réf}$ lorsqu'il vérifie l'équation $eq_7$ suivante :

$$\left|\varphi'_{toa,1} - \varphi'_{toa,2}\right| \lessgtr 2 * \sigma_{toa} * \mathrm{erf}^{-1}\left(P(H_0|H_0)\right)$$

où les notations sont identiques aux notations des équations $eq_5$ et $eq_6$.

Seuls les éléments de l'ensemble d'éléments E vérifiant l'intégralité des critères de l'ensemble de critères C sont compatibles avec le groupe de référence $g_{réf}$. L'éventualité d'avoir au moins deux éléments compatibles avec le groupe de référence $g_{réf}$ est peu fréquente. Cependant, si tel est le cas, la distance d est l'écart en temps séparant la dernière impulsion $I_m$ du groupe de référence $g_{réf}$ de la première impulsion $I_1$ de l'élément candidat de l'ensemble d'élément candidat $E_c$. L'élément réunit avec le groupe de référence $g_{réf}$ est alors l'élément qui minimise la distance d, c'est-à-dire l'élément pour lequel l'écart en temps entre la première impulsion $I_1$ de l'élément et la dernière impulsion $I_m$ du groupe de référence $g_{réf}$ est minimum.

Lorsqu'un élément de l'ensemble d'éléments candidats $E_c$ est annexé au groupe de référence $g_{réf}$, les données caractéristiques du groupe obtenu sont mises à jour.

Ainsi, le temps d'arrivée de la première impulsion du groupe obtenu est le minimum du temps d'arrivée de la première impulsion du groupe de référence $g_{réf}$ et de l'élément annexé. Le temps d'arrivée de la dernière impulsion du groupe obtenu est le maximum des temps d'arrivée de la dernière impulsion du groupe de référence $g_{réf}$ et de l'élément annexé.

La direction d'arrivée DOA du groupe obtenu est la moyenne des directions d'arrivée du groupe de référence $g_{réf}$ et de l'élément annexé.

La fréquence porteuse du groupe obtenu est donnée par l'équation $eq_8$ suivante :

$$f_{groupe} = \frac{N_1 * f_1 + N_2 * f_2}{N_1 + N_2}$$

où $f_{groupe}$ désigne la fréquence porteuse du groupe obtenu,
$N_1$ désigne le nombre d'impulsions du groupe de référence $g_{réf}$,
$f_1$ désigne la fréquence porteuse du groupe de référence $g_{réf}$,
$f_2$ désigne la fréquence porteuse de l'élément annexé, et
$N_2$ désigne le nombre d'impulsions de l'élément annexé.

La somme des fréquences porteuses du groupe obtenu est l'addition de la somme des fréquences porteuses du groupe de référence $g_{réf}$ et de la somme des fréquences porteuses de l'élément annexé. La somme des fréquences porteuses au carré du groupe obtenu est l'addition de la somme des fréquences porteuses au carré du groupe de référence $g_{réf}$ et de la somme des fréquences porteuses au carré de l'élément annexé.

Le nombre d'impulsions du groupe obtenu est la somme du nombre d'impulsions du groupe de référence $g_{réf}$ et du nombre d'impulsions de l'élément annexé.

La largeur d'impulsion LI du groupe obtenu est donnée par l'équation $eq_9$ suivante :

$$LI_{groupe} = \frac{N_1 * LI_1 + N_2 * LI_2}{N_1 + N_2}$$

où $LI_{groupe}$ désigne la longueur d'impulsions LI du groupe obtenu,
$N_1$ désigne le nombre d'impulsions du groupe de référence $g_{réf}$,
$LI_1$ désigne la longueur d'impulsions LI du groupe de référence $g_{réf}$,
$LI_2$ désigne la longueur d'impulsions LI de l'élément annexé, et
$N_2$ désigne le nombre d'impulsions de l'élément annexé.

L'intervalle de répétition des impulsions PRI du groupe obtenu est calculé au moyen d'une régression linéaire par critère des moindres carrés sur l'ensemble des impulsions du nouveau groupe. Cette régression linéaire est donnée par l'équation $eq_{10}$ suivante :

$$\widehat{PRI} = \frac{\sum_i \left( k_i t_i - t_i \sum_r \left(\frac{k_r}{n}\right) \right)}{\sum k_i^2 - \frac{(\sum k_i)^2}{n}}$$

avec $k_i$ l'ordre des impulsions, $t_i$ le temps d'arrivée des impulsions et n le nombre d'impulsions du groupe obtenu.

En variante, une approximation de l'intervalle de répétition des impulsions PRI est calculée en supposant les estimées de l'intervalle de répétition des impulsions PRI du groupe de référence $g_{réf}$ et de l'intervalle de répétition des impulsions PRI de l'élément annexé indépendantes entre elles. L'approximation consiste, en premier lieu, à corriger les intervalles de répétition des impulsions PRI des éléments du groupe et les variances d'intervalle de répétition des impulsions PRI des éléments du groupe lorsque l'intervalle de répétition des impulsions PRI de l'un des éléments du groupe est un multiple de l'intervalle de répétition des impulsions PRI de l'autre élément du groupe. Par exemple, si l'intervalle de répétition des impulsions PRI du groupe de référence $g_{réf}$ est égal à deux fois l'intervalle de répétition des impulsions PRI de l'élément annexé, l'intervalle de répétition des impulsions PRI du groupe de référence $g_{réf}$ est divisée par deux et la variance d'intervalle de répétition des impulsions PRI du groupe de référence $g_{réf}$ est divisée par quatre. Ensuite, l'intervalle de répétition des impulsions PRI du groupe obtenu est calculé à partir de l'équation $eq_{11}$ suivante :

$$\widehat{PRI} = \frac{var\left(\widehat{PRI}_2\right) * \widehat{PRI}_1 + var\left(\widehat{PRI}_1\right) * \widehat{PRI}_2}{var\left(\widehat{PRI}_1\right) + var(\widehat{PRI}_2)}$$

où $\widehat{PRI}$ est l'estimée de l'intervalle de répétition des impulsions du groupe obtenu,

$\widehat{PRI}_1$ est l'estimée de l'intervalle de répétition des impulsions du groupe de référence $g_{réf}$,

$var\left(\widehat{PRI}_1\right)$ est la variance de $\widehat{PRI}_1$,

$\widehat{PRI}_2$ est l'estimée de l'intervalle de répétition des impulsions de l'élément annexé, et

$var\left(\widehat{PRI}_2\right)$ est la variance de $\widehat{PRI}_2$.

En outre, la variance de l'estimée de l'intervalle de répétition des impulsions PRI obtenue avec l'équation $eq_{11}$ vérifie l'équation $eq_{12}$ suivante :

$$var(\widehat{PRI}) = \frac{var\left(\widehat{PRI}_1\right) * var\left(\widehat{PRI}_2\right)}{var\left(\widehat{PRI}_1\right) + var(\widehat{PRI}_2)}$$

où $var(PRI)$ est la variance de l'estimée de l'intervalle de répétition des impulsions du groupe obtenu et les autres notations sont identiques à celles de l'équation $eq_{11}$.

En variante, dans le cas où les variances des intervalles de répétition des impulsions PRI n'ont pas été estimées pour chaque élément du groupe obtenu, un autre calcul d'intervalle de répétition des impulsions PRI consiste à corriger les intervalles de répétition des impulsions multiples comme dans la variante précédente et à calculer l'estimée de l'intervalle de répétition des impulsions PRI du groupe obtenu en utilisant l'équation $eq_{13}$ suivante :

$$\widehat{PRI} = \frac{TOA_{fin} - TOA_{deb}}{\left(\dfrac{TOA_{fin} - TOA_{deb}}{\widehat{PRI}_1} + \dfrac{1}{2}\right)}$$

où $TOA_{deb}$ est le temps d'arrivée de la première impulsion du groupe obtenu,
$TOA_{fin}$ est le temps d'arrivée de la dernière impulsion du groupe obtenu, et les autres notations sont identiques aux notations de l'équation $eq_{11}$.

La variance de l'estimée de l'intervalle de répétition des impulsions PRI obtenue avec l'équation $eq_{13}$ vérifie l'équation $eq_{14}$ suivante :

$$var\left(\widehat{PRI}\right) = 2 * \frac{\sigma_{TOA}^2}{\left(\dfrac{TOA_{fin} - TOA_{deb}}{\widehat{PRI}} + \dfrac{1}{2}\right)^2}$$

où $\sigma_{TOA}^2$ est la variance de la mesure du temps d'arrivée des impulsions, et les autres notations sont identiques aux notations de l'équation eq$_{13}$.

La phase en temps d'arrivée TOA des impulsions du groupe obtenu est calculée suite aux étapes suivantes. En premier lieu, un nouveau temps de référence t$_{ref}$ est pris centré entre le premier élément et le deuxième élément formant le groupe. Puis, les phases de chacun des éléments formant le groupe sont calculées avec ce nouveau temps de référence t$_{ref}$. Ensuite, la phase du groupe obtenu par rapport à ce temps de référence t$_{ref}$ vérifie l'équation eq$_{15}$ suivante :

$$\varphi'_{TOA} = \frac{N_1 * \varphi'_{TOA,1} + N_2 * \varphi'_{TOA,1}}{N_1 + N_2}$$

où $\varphi'_{TOA}$ est la phase en temps d'arrivée des impulsions du groupe obtenu calculée par rapport à un temps de référence t$_{ref}$,

$\varphi'_{TOA,1}$ est la phase du groupe de référence g$_{réf}$ recalculée par rapport à un temps de référence t$_{ref}$,

$N_1$ est le nombre d'impulsions du groupe de référence g$_{réf}$, et

$N_2$ est le nombre d'impulsions de l'élément annexé.

Enfin, la phase du groupe obtenu calculée par rapport à un temps d'origine vérifie l'équation eq$_{16}$ suivante :

$$\varphi_{TOA} = \left(\varphi'_{TOA} + t_{ref}\right) * mod\left(\widehat{PRI}\right)$$

où $\varphi_{TOA}$ est la phase en temps d'arrivée des impulsions du groupe obtenu calculée par rapport au temps d'origine, (x)mod(y) désigne le modulo comme dans l'équation eq$_6$,

t$_{ref}$ est le temps de référence par rapport auquel la phase $\varphi'_{TOA}$ a été calculée,

$\widehat{PRI}$ est l'estimée de l'intervalle de répétition des impulsions du groupe obtenu, et les autres notations sont identiques aux notations de l'équation eq$_{15}$,

Le temps d'origine est le temps de réception de la première impulsion sur le récepteur 12 ou le plus petit temps des impulsions enregistrées sur l'interface 32.

La loi de regroupement variable appliquée lors de la deuxième sous-étape 170 est décrite de manière spécifique dans ce qui suit.

Chaque élément de l'algorithme est un train d'impulsions T$_1$, ..., T$_n$ de la deuxième classe C$_2$ des trains d'impulsions T$_1$, ..., T$_n$ de fréquence porteuse variable et chaque groupe de l'algorithme est un palier d'impulsions P$_1$, ..., P$_p$ de fréquence porteuse variable. En outre, l'ensemble d'éléments E de l'algorithme est l'ensemble des trains d'impulsions T$_1$, ..., T$_n$ de la deuxième classe C$_2$ des trains d'impulsions T$_1$, ..., T$_n$ de fréquence porteuse variable.

Dans ce qui suit, seules les différences de la deuxième sous-étape 170 par rapport à la première sous-étape 160 sont mises en évidence.

Le critère fréquentiel stipule que la différence entre la fréquence porteuse maximale des impulsions d'un élément et la fréquence porteuse minimale des impulsions de l'élément doit être inférieure à un seuil. Ce seuil est lié aux limites technologiques de balayage fréquentiel des émetteurs radar d'intérêt. Ce seuil est choisi d'après les statistiques sur les formes d'ondes de la base de données utilisée. Ce seuil est, par exemple, compris au sens large entre 100 Mégahertz (MHz) et 10 Gigahertz (GHz).

Le procédé de désentrelacement comprend, ensuite une étape 180 d'association en recouvrement des paliers d'impulsions P$_1$, ..., P$_p$ selon une loi d'association.

Lors de l'étape d'association en recouvrement 180, les paliers d'impulsions P$_1$, ..., P$_p$ ayant un même intervalle de répétition des impulsions PRI et qui se superposent dans le temps sont regroupés pour former des groupes de paliers d'impulsions G$_1$, ..., G$_g$ en recouvrement.

Plus précisément, l'étape 180 d'association en recouvrement des paliers d'impulsions P$_1$, ..., P$_p$ est mise en oeuvre, uniquement pour les paliers d'impulsions P$_1$, ..., P$_p$ de fréquence porteuse fixe obtenus lors de l'étape de regroupement 150.

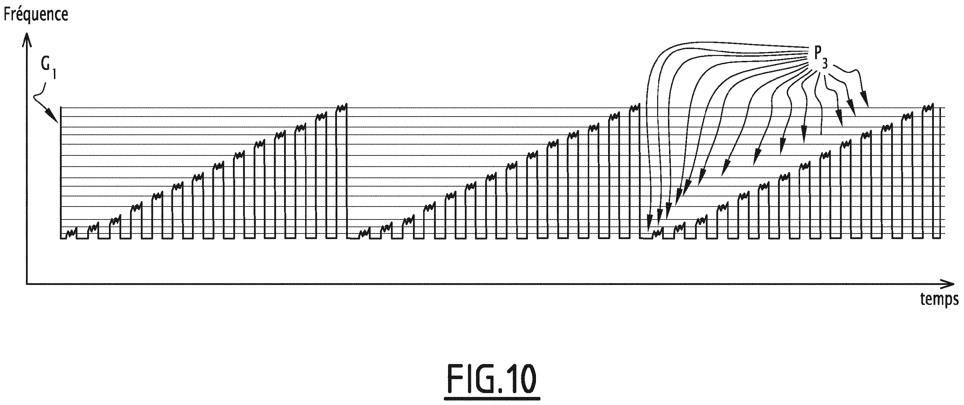

L'étape d'association en recouvrement 180 permet, notamment, de regrouper des formes d'ondes modulée en fréquence appelée FMICW (abréviation de l'anglais *Frequency Modulated Interrupted Continuous Wave*). Les ondes FMICW sont formées d'impulsions espacées d'un même intervalle de répétition des impulsions PRI et dont la fréquence porteuse augmente continûment dans le temps pendant une durée donnée. Le profil fréquentiel d'une onde FMICW est illustré en fonction du temps sur la figure 10. Les impulsions de même fréquence et ayant la même période de répétition des impulsions PRI forment un train d'impulsions ou un palier d'impulsions.

Comme visible sur la figure 10, chaque impulsion appartient à un palier d'impulsions $P_3$. Les impulsions d'un même palier d'impulsions $P_3$ ont la même fréquence. Les paliers d'impulsions $P_3$ de la figure 10 n'ont pas été regroupés pour former un seul palier d'impulsions lors de l'étape de regroupement 150 car le critère temporel de l'étape de regroupement 150 élimine les éléments se superposant dans le temps. Or, les paliers d'impulsions ou trains d'impulsions d'une onde FMICW se superposent dans le temps. L'étape d'association en recouvrement 180 permet donc, dans le cas des ondes FMICW, d'assembler des paliers d'impulsions se superposant dans le temps de sorte à reconstruire un signal FMICW. Ainsi, sur cette figure 10, l'assemblage des paliers d'impulsions $P_3$ permet de former un groupe de paliers d'impulsions $G_1$.

La loi d'association utilisée pour associer en recouvrement les paliers d'impulsions $P_1$, ..., $P_p$ de fréquence porteuse fixe est par la suite appelée « loi d'association en recouvrement ».

La loi d'association en recouvrement est mise en oeuvre par un algorithme de même structure générale que la structure générale de l'algorithme de la loi de recouvrement fixe décrit dans l'étape de regroupement 150.

Chaque élément de l'algorithme est un palier d'impulsions $P_1$, ..., $P_p$ de fréquence porteuse fixe et chaque groupe de l'algorithme est un groupe de paliers d'impulsions $G_1$, ..., $G_g$ en recouvrement. Le groupe de référence $g_{réf}$ de l'algorithme est un groupe de paliers d'impulsions $G_1$,..., $G_g$. En outre, l'ensemble d'éléments E de l'algorithme est l'ensemble des paliers d'impulsions $P_1$, ..., $P_p$ de fréquence porteuse fixe.

Dans ce qui suit, les caractéristiques de la loi d'association en recouvrement identiques aux caractéristiques de la loi de regroupement fixe ne sont pas décrites à nouveau. Seules les différences de la loi d'association en recouvrement par rapport à la loi de regroupement fixe sont décrites dans ce qui suit.

Le critère temporel stipule que pour être compatibles, deux éléments doivent se superposer dans le temps.

Lorsque le groupe de référence $g_{réf}$ est un groupe de paliers d'impulsions, le critère fréquentiel est identique au critère fréquentiel de la deuxième sous-étape 170 de l'étape de regroupement 150. Dans ce cas, le critère de phase n'est pas appliqué. En effet, il n'existe aucune contrainte sur les phases en temps d'arrivée des impulsions au niveau de groupes de paliers.

Lorsque le groupe de référence $g_{réf}$ est un palier d'impulsions $P_1$, ..., $P_p$, le critère de phase est identique au critère de phase de la première sous-étape 160 de l'étape de regroupement 150. Dans ce cas, si le critère de phase est vérifié et si les critères de direction d'arrivée, temporel, de largeur d'impulsion et d'intervalle de répétition des impulsions sont également vérifiés, alors le critère fréquentiel s'évalue selon deux cas de figures.

Dans le premier cas de figure, les fréquences porteuses des impulsions des deux paliers d'impulsions $P_1$, ..., $P_p$ à comparer sont identiques et le nombre théorique d'impulsions des deux paliers réunis est supérieur ou égal au nombre réel d'impulsions des deux paliers d'impulsions $P_1$, ..., $P_p$ réunis. Dans ce premier cas de figure, les deux paliers sont compatibles.

Dans le deuxième cas de figure, les fréquences porteuses des impulsions des deux paliers d'impulsions $P_1$, ..., $P_p$ à comparer sont différentes ou le nombre théorique d'impulsions des deux paliers réunis est inférieur au nombre réel d'impulsions des deux paliers d'impulsions $P_1$, ..., $P_p$ réunis. Dans ce deuxième cas de figure, les deux paliers sont incompatibles.

Entre plusieurs éléments compatibles pour être réunis avec un groupe de référence $g_{réf}$, l'étape d'association en recouvrement 180 donne la priorité à l'élément dont la phase est déjà présente dans le groupe de référence $g_{réf}$. Cette première règle de priorité permet de réunir en premier les paliers d'impulsions $P_1$, ..., $P_p$ éclatés et de même intervalle de répétition des impulsions PRI. En outre, si un groupe correspondant à un FMICW est déjà en formation, une deuxième règle de priorité s'applique. Selon cette deuxième règle de priorité, les informations des paliers déjà présents dans le groupe correspondant à un FMICW sont consolidées, avant de rajouter un nouveau palier d'impulsions $P_1$, ..., $P_p$ au groupe.

Une fois les règles de priorité appliquées, la préférence est donnée à l'élément compatible qui a le meilleur taux de recouvrement avec le groupe de référence $g_{réf}$. Le taux de recouvrement est donné par l'équation $eq_{17}$ suivante :

$$taux_{recouvrement} = \frac{\Delta T_{recouvement}}{Min(\Delta T_1, \Delta T_2)}$$

où $taux_{recouvrement}$ est le taux de recouvrement entre un premier élément et un deuxième élément, ce taux de recouvrement est compris entre 0 et 100%

$\Delta T_{recouvrement}$ est l'écart temporel entre le temps de réception de la première impulsion de l'élément compatible et le temps de réception de la dernière impulsion du groupe de référence $g_{réf}$,

$\Delta T_1$ est la durée du groupe de référence $g_{réf}$,

$\Delta T_2$ est la durée de l'élément compatible, et

$Min(\Delta T_1, \Delta T_2)$ est le minimum de $\Delta T_1$ et $\Delta T_2$.

La distance d que doit minimiser un élément de l'ensemble d'éléments candidats pour être réuni au groupe de référence $g_{réf}$ est donnée par l'équation $eq_{18}$ suivante :

$$d = a + (1 - taux_{recouvrement})$$

où a prend la valeur zéro si les phases sont égales, et prend la valeur 1 si les phases ne sont pas égales, les autres notations étant identiques aux notations de l'équation $eq_{17}$.

Le choix d'une telle distance d permet de réunir au groupe de référence $g_{réf}$, l'élément qui fait croître le plus rapidement un taux d'explication. Le taux d'explication d'un groupe est le rapport du nombre d'impulsions réelles du groupe sur le nombre d'impulsions théoriques du groupe.

Lorsqu'un élément est annexé au groupe de référence $g_{réf}$, les caractéristiques du groupe obtenu en terme de direction d'arrivée DOA des impulsions, de temps d'arrivée de la première impulsion, de temps d'arrivée de la dernière impulsion, de fréquence des impulsions, de nombre d'impulsion, d'intervalle de répétition des impulsions PRI, de largeur d'impulsion LI, de phase en temps d'arrivée des impulsions sont mises à jour en procédant de la même manière que lors de la première sous-étape 160 de l'étape de regroupement 150.

Le procédé de désentrelacement comprend, ensuite, une étape 190 d'association en commutation des paliers d'impulsion.

Lors de l'étape d'association en commutation 190, les paliers d'impulsions $P_1$, ..., $P_p$ ayant un intervalle de répétition des impulsions PRI différent et s'enchaînant dans le temps sont regroupés suivant au moins une loi d'association prédéfinie pour former des groupes de paliers d'impulsions $G_1$, ..., $G_g$ en commutation.

Par exemple, comme illustré sur la figure 12, les paliers d'impulsions $P_7$, $P_8$, $P_9$, et $P_{10}$ sont reliés par des flèches en traits fins pour former un groupe de paliers d'impulsions $G_1$, ..., $G_g$ en commutation. De même, les paliers d'impulsions $P_{11}$, $P_{12}$, $P_{13}$ et $P_{14}$ sont reliés par des flèches en traits gras pour former un autre groupe de paliers d'impulsions $G_1$,..., $G_g$ en commutation. Comme visible sur cette figure 12, chaque groupe de paliers $G_1$, ... $G_g$ est formé de paliers qui ne se superposent pas dans le temps et qui ont des intervalles de répétition des impulsions PRI différents.

Plus précisément, l'étape 190 d'association en commutation des paliers d'impulsions $P_1$, ..., $P_p$ est mise en oeuvre, d'une part, lors d'une première sous-étape 200, pour les paliers d'impulsions $P_1$, ..., $P_p$ de fréquence porteuse fixe n'ayant pas été regroupés lors de l'étape d'association en recouvrement 180. A l'issue de cette première sous-étape 200, des groupes de paliers d'impulsions $G_1$, ..., $G_g$ en recouvrement de fréquence porteuse fixe sont obtenus. Dans ce cas, la loi d'association mise en oeuvre est appelée « loi d'association en commutation fixe ».

L'étape 190 d'association en commutation des paliers d'impulsions $P_1$, ..., $P_p$ est mise en oeuvre, d'autre part, pour les paliers d'impulsions $P_1$, ..., $P_p$ de fréquence porteuse variable lors d'une deuxième sous-étape 210 pour obtenir des groupes de paliers d'impulsions $G_1$, ..., $G_g$ en commutation de fréquence porteuse variable. Dans ce cas, la loi d'association mise en oeuvre est appelée « loi d'association en commutation variable ».

Chacune des lois d'association en commutation est mise en oeuvre par un algorithme dont la structure générale est identique à la structure générale de l'algorithme décrit lors de l'étape de regroupement 150.

Chaque élément de l'algorithme est un palier d'impulsions $P_1$, ..., $P_p$ et chaque groupe de l'algorithme est un groupe de paliers d'impulsions $G_1$, ..., $G_g$. Le groupe de référence $g_{réf}$ est un groupe de paliers d'impulsions $G_1$,..., $G_g$.

Dans ce qui suit, les caractéristiques de la loi d'association en commutation fixe identiques aux caractéristiques de la loi de regroupement fixe ne sont pas décrites à nouveau. Seules les différences de la loi d'association en commutation fixe par rapport à la loi de regroupement fixe sont décrites dans ce qui suit.

Chaque élément de l'algorithme est un palier d'impulsions $P_1$, ..., $P_p$ de fréquence porteuse variable n'ayant pas été réuni lors de l'étape d'association en recouvrement 180. Chaque groupe de l'algorithme est un groupe de paliers d'impulsions $G_1$,..., $G_g$ en commutation de fréquence porteuse fixe. En outre, l'ensemble d'éléments E de l'algorithme est l'ensemble des paliers d'impulsions $P_1$, ..., $P_p$ de fréquence porteuse fixe n'ayant pas été réunis lors de l'étape de regroupement 150.

Le critère de largeur d'impulsion permet de déterminer les paliers ayant des largeurs d'impulsions LI proches ou des facteurs de forme proches. Le facteur de forme d'un palier est défini comme le rapport entre la largeur d'impulsion LI du palier et l'intervalle de répétition des impulsions PRI. En effet, l'observation de formes d'ondes spécifiques, notamment des formes d'ondes de type haute fréquence de récurrence et moyenne fréquence de récurrence, montre une constante dans les valeurs des largeurs d'impulsions d'un même signal et/ou dans les valeurs des facteurs de forme des paliers d'un même signal. Les mesures de largeurs d'impulsions LI étant relativement peu fiables, le critère de largeurs d'impulsion consiste en un test de comparaison des ordres de grandeur des largeurs d'impulsion de deux éléments ou des facteurs de forme de deux éléments.

Le critère d'intervalle de répétition des impulsions PRI permet de déterminer les paliers ayant des intervalles de répétition des impulsions proches. En effet, l'observation de différentes formes d'ondes permet de définir une limite supérieure dans les écarts d'intervalles de répétition des impulsions des paliers d'un même signal. En effet, pour un même signal, les intervalles de répétition des impulsions des différents paliers formant le signal ne doivent pas être espacés de plus d'une certaine valeur seuil. Par conséquent, deux paliers sont compatibles lorsque les intervalles de répétition des impulsions PRI de chacun des deux paliers vérifient l'équation $eq_{19}$ suivante :

$$\frac{Max(PRI_1, PRI_2) - Min(PRI_1, PRI_2)}{Max(PRI_1, PRI_2) + Min(PRI_1, PRI_2)} < S_1$$

où $PRI_1$ est l'intervalle de répétition des impulsions du groupe de référence $g_{réf}$,

$PRI_2$ est l'intervalle de répétition des impulsions de l'élément annexé,

$Max(PRI_1, PRI_2)$ est le maximum de $PRI_1$ et $PRI_2$,

$Min(PRI_1, PRI_2)$ est le minimum de $PRI_1$ et $PRI_2$ et

$S_1$ est un seuil d'écart relatif choisi d'après les statistiques sur les formes d'ondes de la base de données utilisée, ou valant par exemple 60%.

L'équation $eq_{19}$ est valide pour les formes d'ondes de type haute et moyenne fréquence de récurrence.

Le critère fréquentiel permet de déterminer les paliers ayant des fréquences porteuses des impulsions proches. En effet, l'observation de différentes formes d'ondes permet de poser une limite supérieure dans les écarts de fréquence porteuse des impulsions des paliers d'un même signal. Une telle limite supérieure est liée aux limites technologiques des émetteurs. Selon le critère fréquentiel, deux éléments compatibles vérifient chacun en premier lieu l'équation $eq_{20}$ suivante :

$$\frac{|f_1 - f_{moy}|}{f_1 + f_{moy}} < S_2$$

où $f_1$ est la fréquence porteuse de l'un des éléments à tester,

$f_{moy}$ est la moyenne des fréquences porteuses issue de la réunion des deux éléments à tester, et

$S_2$ est un seuil d'écart relatif choisi d'après les statistiques sur les formes d'ondes de la base de données utilisée, ou valant par exemple 10%.

En outre, selon le critère fréquentiel, deux éléments compatibles vérifient chacun également l'équation $eq_{21}$ suivante :

$$|f_1 - f_{moy}| < S_3$$

où les notations sont identiques aux notations de l'équation $eq_{20}$, et

$S_3$ est un seuil choisi d'après les statistiques sur les formes d'ondes de la base de données utilisée, ou étant, par exemple, compris au sens large entre 100 MHz et 10 GHz.

Le critère de nombre d'impulsion par palier permet de déterminer les paliers ayant des nombres d'impulsions proches. En effet, l'observation de différentes formes d'ondes permet de déterminer un seuil au-delà duquel deux paliers sont incompatibles.

Selon le critère de nombre d'impulsions, deux éléments compatibles vérifient chacun l'équation $eq_{22}$ suivante :

$$\frac{|Nth_{palier} - Nth_{moy}|}{Nth_{palier} + Nth_{moy}} < S_4$$

où $Nth_{palier}$ est le nombre d'impulsions théorique de l'un des éléments à tester,

$Nth_{moy}$ est le nombre théorique moyen d'impulsions issu de la réunion des deux éléments à tester, et

$S_4$ est un seuil fixé en fonction de la base de données de formes d'ondes utilisée ou compris au sens large par exemple entre 5% et 30% pour les formes d'ondes de type haute ou moyenne fréquence de récurrence.

Lors de la première sous-étape 200 de l'étape d'association en commutation 190, la mesure de distance d permet de sélectionner parmi les éléments compatibles de l'algorithme celui qui partage le plus de caractéristiques communes avec le groupe de référence $g_{réf}$ de l'algorithme. Les caractéristiques communes recherchées sont les suivantes : le groupe de référence $g_{réf}$ a une de ses largeurs d'impulsions LI proche de la largeur d'impulsion LI d'une impulsion d'un élément candidat, le groupe de référence $g_{réf}$ a un facteur de forme proche du facteur de forme d'un élément candidat, le groupe de référence $g_{réf}$ partage une de ses fréquences porteuses avec un élément candidat ou encore le groupe de référence $g_{réf}$ possède le même nombre d'impulsions théoriques que l'un des éléments candidats.

La distance d est définie par un score donné par l'équation $eq_{23}$ suivante :

$$d = 1 * b + 1 * c + 1 * e + 1 * g + 1 * h + score$$

où b est un nombre égal à 1 si les deux éléments à comparer ne présentent pas de facteur de forme commun et égal à 0 sinon,

c est un nombre égal à 1 si les deux éléments à comparer ne présentent pas de largeurs d'impulsion communes et égal à 0 sinon,

e est un nombre égal à 1 si les deux éléments à comparer ne présentent pas de nombre d'impulsions théorique commun et égal à 0 sinon,

g est un nombre égal à 1 si les deux éléments à comparer ne présentent pas d'intervalle de répétition des impulsions PRI commun et égal à 0 sinon,

h est un nombre égal à 1 dans le cas de paliers mono-fréquence où les deux éléments à comparer ne présentent pas de fréquence porteuse d'impulsion commune et égal à 0 dans les autres cas, et

score est un seuil compris entre 0 et 1 et donné par l'équation $eq_{24}$ suivante :

$$score = \frac{1}{2}\left(\frac{TOA_{deb,2} - TOA_{fin,1}}{\Delta t_{ref}} + \left|\frac{f_2 - f_{moy,1}}{\Delta f_{ref}}\right|\right)$$

où $TOA_{deb,2}$ est le temps d'arrivée de la première impulsion de l'élément,

$TOA_{fin,1}$ est le temps d'arrivée de la dernière impulsion du groupe de référence,

$f_{moy,1}$ est la fréquence porteuse moyenne des impulsions du groupe de référence $g_{réf}$,

$f_2$ est la fréquence porteuse des impulsions de l'élément,

$\Delta t_{ref}$ est une valeur choisie d'après les statistiques sur les formes d'ondes de la base de données utilisée ou une valeur comprise au sens large entre 1 ms et 10 ms,

$\Delta f_{ref}$ est une valeur choisie d'après les statistiques sur les formes d'ondes de la base de données utilisée ou pouvant par exemple être égale au seuil $S_3$ de l'équation $eq_{21}$. En variante, une autre distance d peut encore être utilisée.

La mise à jour des caractéristiques de chaque groupe obtenu à l'issue de la première sous-étape 200 de l'étape d'association en commutation 190 est identique à la mise à jour effectuée lors de l'étape d'association en recouvrement 180.

La deuxième sous-étape 210 de l'étape d'association en commutation 190 est rigoureusement identique à la première sous-étape 200 de l'étape d'association en commutation 190 à la différence que chaque élément de l'algorithme est un palier d'impulsions $P_1$, ..., $P_p$ de fréquence porteuse variable et chaque groupe de l'algorithme est un groupe de paliers d'impulsions $G_1$,..., $G_g$ en commutation de fréquence porteuse variable. En outre, dans le cas de la deuxième sous-étape 210, l'ensemble d'éléments E de l'algorithme est l'ensemble des paliers d'impulsions $P_1$, ..., $P_p$ de fréquence porteuse variable.

Par ailleurs, la caractéristique commune selon laquelle, le groupe de référence $g_{réf}$ partage l'une de ses fréquences porteuses avec un élément candidat, n'est pas recherchée lors de cette deuxième sous-étape 210 et le nombre h de l'équation $eq_{23}$ est toujours nul lors de cette deuxième sous-étape 210.

Ainsi, à l'issue de l'étape d'association en recouvrement 180 et de l'étape d'association en commutation 190, trois types de groupes de paliers d'impulsions $G_1$,..., $G_g$ sont obtenus : un premier type de groupes de paliers d'impulsions $G_1$,..., $G_g$ en recouvrement, un deuxième type de groupes de paliers d'impulsions $G_1$,..., $G_g$ en commutation de fréquence porteuse fixe et un troisième type de groupes de paliers d'impulsions $G_1$,..., $G_g$ en commutation de fréquence porteuse variable. Chaque type de groupe regroupe des signaux radars ayant des caractéristiques communes. Chaque groupe résulte de la concaténation des trains d'impulsions $T_1$, ..., $T_n$ formant les paliers d'impulsions $P_1$, ..., $P_p$ associés lors des étapes d'association 180 et 190. Chaque groupe est donc un signal radar désentrelacé formé de la concaténation d'impulsions selon une loi de regroupement et une loi d'association.

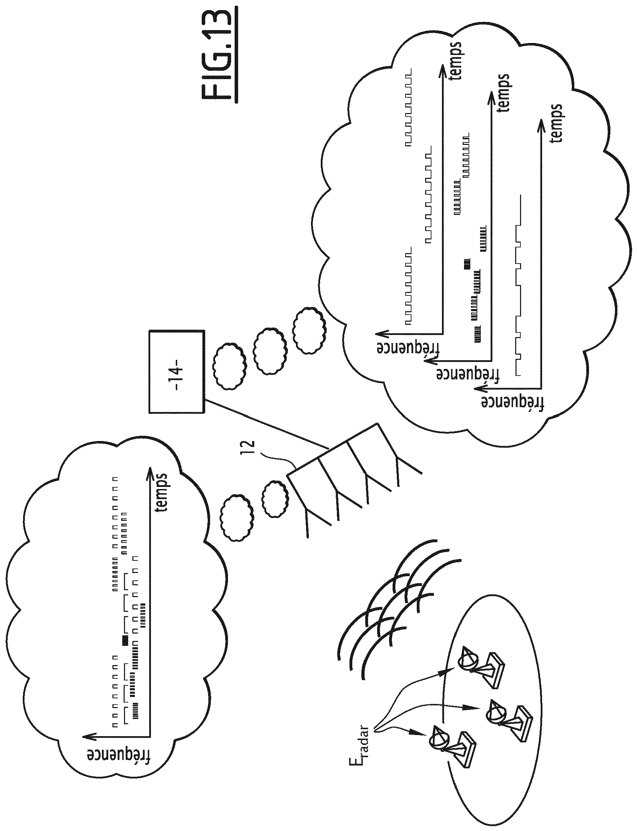

La figure 13 illustre la chaîne de désentrelacement de signaux radars. Sur cette figure 13, trois émetteurs radars $E_{radar}$ émettent des signaux radars qui sont interceptés par le récepteur 12. Les signaux reçus par le récepteur 12 et en provenance d'émetteurs radars différents sont mélangés et superposés entre eux. La mise en oeuvre du procédé selon l'invention par le calculateur 14 permet de regrouper entre eux les trains d'impulsions issus d'un même émetteur radar et d'obtenir ainsi trois groupes de signaux radars désentrelacés.

Ainsi, le procédé de désentrelacement selon l'invention permet de regrouper séparément les trains d'impulsions $T_1$, ..., $T_n$ de différents signaux radar dont l'intervalle de répétition des impulsions est moyen ou court, en milieu électromagnétique dense.

Les lois de regroupement et les lois d'associations utilisées pour regrouper les trains d'impulsions $T_1$, ..., $T_n$ d'un même signal radar, mettent en oeuvre une première phase de sélection des éléments compatibles et une deuxième phase de minimisation d'une distance d. La première phase de sélection permet, notamment, d'éliminer les trains d'impulsions $T_1$, ..., $T_n$ ou paliers d'impulsions $P_1$, ..., $P_p$ n'ayant pas les mêmes caractéristiques structurelles et de s'affranchir ainsi de l'obtention de signaux désentrelacés erronés. Ainsi, l'ensemble de critères C permet une élimination rapide des éléments de l'algorithme incompatibles entre eux. La vitesse de l'algorithme est, ainsi, meilleure que $O(N^2)$, avec N le nombre d'éléments initial de l'ensemble d'éléments E de l'algorithme, c'est-à-dire que le temps de calcul de l'algorithme croît moins vite que le carré du nombre d'éléments à traiter. L'algorithme de regroupement des trains d'impulsions nécessite généralement moins de temps de calcul que quelques millisecondes ou dizaines de millisecondes sur un processeur actuel.

En outre, la distance d à minimiser est spécifique à chacune des lois de regroupement et d'association de sorte à prendre en compte les caractéristiques structurelles de chacun des types de groupe notamment.

L'étape de classification 140 classe, puis traite les trains d'impulsions $T_1$, ..., $T_n$ en fonction de la forme d'onde à laquelle les trains d'impulsions $T_1$, ..., $T_n$ appartiennent. Les bases de données de formes d'ondes sont donc exploitées de manière à mettre en oeuvre un traitement adapté aux différents types de formes d'ondes. Par exemple, l'étape d'association en recouvrement 180 est spécifique des formes d'ondes de fréquence porteuse fixe, ayant des paliers d'impulsions $P_1$, ..., $P_p$ qui se superposent dans le temps, notamment des formes d'ondes FMICW. En l'absence, de l'étape d'association en recouvrement 180, de telles formes d'ondes n'auraient pas été regroupées de manière optimale lors de l'étape d'association en commutation 190.

En outre, l'étape 120 de rejet des trains d'impulsions $T_1$, ..., $T_n$ incohérents en intervalle de répétition des impulsions PRI et optionnellement en fréquence porteuse des impulsions, permet d'effectuer un premier tri des trains d'impulsions $T_1$, ..., $T_n$ non viables. Ainsi, les trains d'impulsions $T_1$, ..., $T_n$ incohérents sont éliminés.

De même, l'étape 130 de rejet des trains d'impulsions $T_1$, ..., $T_n$ n'appartenant pas à des formes d'ondes prédéfinie permet d'augmenter la précision du regroupement de trains d'impulsions $T_1$, ..., $T_n$ lors de l'étape de regroupement 150 et la précision de l'association des paliers d'impulsions $P_1$, ..., $P_p$ lors des étapes d'association 180 et 190.

En outre, les mitages sont également pris en compte puisque les lois de regroupement et d'association du procédé incluent l'hypothèse d'intervalle de répétition des impulsions PRI double ou encore triple.

Ainsi, le procédé de désentrelacement est innovant de par son meilleur contrôle des données d'entrée, par sa hiérarchisation des étapes du procédé de désentrelacement qui permet un classement des données plus rapide et plus proche de la réalité et par l'utilisation de règles de regroupement s'appuyant sur des bases de données de formes d'ondes réelles.

Le procédé de désentrelacement permet le regroupement des trains d'impulsions avec une meilleure fiabilité que dans l'état de la technique, tout en ne dégradant pas les performances de vitesse des algorithmes mis en oeuvre.

Par ailleurs, les algorithmes des lois de regroupement et d'association sont adaptables, dans la mesure où chacun des critères de l'ensemble de critères C et chacun des tests de comparaison de ces critères sont modifiables sans pour autant nécessiter de modifier l'intégralité des algorithmes. De même, la distance d est également modifiable localement pour chacun de ces algorithmes. Ainsi, le procédé selon l'invention est tout à fait apte à suivre l'évolution dans le temps des émetteurs radars.

## Revendications

**1.** Procédé de désentrelacement de signaux radars, le procédé comprenant :

- la réception (100) de signaux électromagnétiques par un récepteur (12) et l'extraction des impulsions ($I_1$, ...,

I$_m$) des signaux reçus,

- la formation (110) de trains d'impulsions (T$_1$, ..., T$_n$) regroupant au moins trois impulsions espacées d'un même intervalle de répétition des impulsions (PRI), chaque train d'impulsions (T$_1$, ..., T$_n$) étant défini par l'intervalle de répétition des impulsions (PRI), **caractérisé en ce que** le procédé comporte en outre :
- le regroupement (150) des trains d'impulsions (T$_1$, ..., T$_n$) ayant un même intervalle de répétitions des impulsions (PRI) suivant une loi de regroupement prédéfinie pour former des paliers d'impulsions (P$_1$, ..., P$_p$), et
- l'association (180, 190) des paliers d'impulsions (P$_1$, ..., P$_p$) suivant au moins une loi d'association prédéfinie pour obtenir des signaux radars désentrelacés formés de la concaténation des trains d'impulsions (T$_1$, ..., T$_n$) des paliers d'impulsions (P$_1$, ..., P$_p$) associés, l'étape d'association (180, 190) comprenant au moins une phase de regroupement choisie parmi :

   ◦ une phase (190) de regroupement des paliers d'impulsions (P$_1$, ..., P$_p$) d'intervalles de répétition des impulsions (PRI) différents et qui s'enchaînent dans le temps pour obtenir des groupes de paliers d'impulsions (G$_1$,..., G$_g$) en commutation, et
   ◦ une phase (180) de regroupement des paliers d'impulsions (P$_1$, ..., P$_p$) de fréquence porteuse fixe, ayant des intervalles de répétitions des impulsions (PRI) identiques et se superposant dans le temps pour obtenir des groupes de paliers d'impulsions (G$_1$,..., G$_g$) en recouvrement.

2. Procédé selon la revendication 1, dans lequel chaque train d'impulsions (T$_1$, ..., T$_n$) est également défini par au moins un élément choisi dans un groupe constitué de : le temps d'arrivée (TOA) de la première impulsion (I$_1$) du train d'impulsions (T$_1$, ..., T$_n$), le temps d'arrivée (TOA) de la dernière impulsion (I$_m$) du train d'impulsions (T$_1$, ..., T$_n$), la fréquence des impulsions (I$_1$, ..., I$_m$) du train d'impulsions (T$_1$, ..., T$_n$), la durée des impulsions (I$_1$, ..., I$_m$) du train d'impulsions (T$_1$, ..., T$_n$) et la direction d'arrivée des impulsions (I$_1$, ..., I$_m$) du train d'impulsions (T$_1$, ..., T$_n$).

3. Procédé selon la revendication 1 ou 2, dans lequel le procédé comporte avant l'étape de regroupement (150), une étape de classification (140) des trains d'impulsions (T$_1$, ..., T$_n$) selon leur fréquence porteuse pour obtenir deux classes (C$_1$, C$_2$) de trains d'impulsions (T$_1$, ..., T$_n$) : une classe (C$_1$) regroupant les trains d'impulsions (T$_1$, ..., T$_n$) de fréquence porteuse fixe et l'autre classe (C$_2$) regroupant les trains d'impulsions (T$_1$, ..., T$_n$) de fréquence porteuse variable, l'étape de regroupement (150) étant mise en oeuvre pour chacune des deux classes (C$_1$, C$_2$) de trains d'impulsions (T$_1$, ..., T$_n$) et permettant d'obtenir des paliers d'impulsions (P$_1$, ..., P$_p$) mono-fréquence à partir de la classe (C$_1$) des trains d'impulsions (T$_1$, ..., T$_n$) mono-fréquence et des paliers d'impulsions (P$_1$, ..., P$_p$) agiles en fréquence à partir de la classe (C$_2$) des trains d'impulsions (T$_1$, ..., T$_n$) agiles en fréquence.

4. Procédé selon l'une quelconque des revendications précédentes, dans lequel chacune des lois de regroupement et d'association est mise en oeuvre par au moins un algorithme permettant d'obtenir des groupes à partir d'éléments, les éléments désignant des trains d'impulsions (T$_1$, ..., T$_n$) lors de l'étape de regroupement et des paliers d'impulsions (P$_1$, ..., P$_p$) lors de l'étape d'association, les groupes désignant des palier d'impulsions (P$_1$, ..., P$_p$) lors de l'étape de regroupement et des groupes de paliers d'impulsions (G$_1$,..., G$_g$) lors de l'étape d'association, l'algorithme comprenant :

   ◦ le choix (150A) d'un élément de référence (e$_{réf}$) parmi un ensemble d'éléments (E),
   ◦ la suppression (150B) de l'élément de référence (e$_{réf}$) de l'ensemble d'éléments (E) et l'ajout, dans un ensemble de groupes (E$_g$), d'un groupe de référence (g$_{réf}$) comportant l'élément de référence (e$_{réf}$),
   ◦ la sélection (150C) dans l'ensemble d'éléments (E), des éléments compatibles avec le groupe de référence (g$_{réf}$) selon un ensemble de critères (C) pour obtenir un ensemble d'éléments candidats (E$_c$),
   ◦ l'évaluation (150D) de la distance entre le groupe de référence (g$_{réf}$) et chaque élément de l'ensemble d'éléments candidats (E$_c$),
   ◦ l'annexion (150E) de l'élément de l'ensemble d'éléments candidats (E$_c$) minimisant une distance (d) au groupe de référence (g$_{réf}$) et la suppression de l'élément annexé de l'ensemble d'éléments (E),
   ◦ la répétition des phases de sélection (150C), d'évaluation (150D) et d'annexion (150E) tant que l'ensemble des éléments candidats (E$_c$) comporte des éléments, et
   ◦ la répétition de l'ensemble des phases précédentes (150A, 150B, 150C, 150D, 150E) tant que l'ensemble d'éléments (E) comporte des éléments.

5. Procédé selon la revendication 4, dans lequel l'élément de référence (e$_{réf}$) est l'élément de l'ensemble d'éléments (E) dont le temps d'arrivée (TOA) de la première impulsion (I$_1$) est le plus petit.

6. Procédé selon la revendication 4 ou 5, dans lequel l'ensemble de critères (C) évalue la compatibilité des éléments de l'ensemble d'éléments (E) avec le groupe de référence ($g_{réf}$) en fonction d'une ou de plusieurs caractéristiques, les caractéristiques étant choisies dans un groupe comprenant : la direction d'arrivée (DOA) des éléments, la superposition temporelle des éléments, la fréquence porteuse (f) des éléments, la largeur d'impulsion (LI) des éléments, l'intervalle de répétition des impulsions (PRI) des éléments, la phase ($\Phi$) des éléments et le nombre d'impulsions des éléments.

**7.** Procédé selon l'une quelconque des revendications 4 à 6, dans lequel les critères (C) sont choisis d'après des statistiques sur les caractéristiques des formes d'ondes radars d'une base de données.

**8.** Procédé selon l'une quelconque des revendications 4 à 7, dans lequel pour la loi de regroupement, la distance (d) est l'écart en temps séparant la dernière impulsion ($I_n$) du groupe de référence ($g_{réf}$) de la première impulsion ($I_1$) de l'élément candidat de l'ensemble d'éléments candidats ($E_c$), et dans lequel pour la loi d'association, la distance (d) est un taux de recouvrement entre le groupe de référence ($g_{réf}$) et l'élément candidat de l'ensemble d'éléments candidats ($E_c$) ou un score permettant de sélectionner parmi l'ensemble d'éléments candidats ($E_c$) l'élément partageant le plus de caractéristiques communes avec le groupe de référence ($g_{réf}$).

**9.** Procédé selon l'une quelconque des revendications précédentes, dans lequel le procédé comporte avant l'étape de regroupement (150), une étape de rejet (120) des trains d'impulsions incohérents en termes d'intervalle de répétition des impulsions (PRI).

**10.** Procédé selon la revendication 9, dans lequel l'étape de rejet (120) comprend l'élimination des trains d'impulsions incohérents en termes de fréquence porteuse des impulsions.

**11.** Procédé selon l'une quelconque des revendications précédentes, dans lequel le procédé comporte avant l'étape de regroupement (150), une étape de rejet (130) des trains d'impulsions dont l'intervalle de répétition des impulsions (PRI) est supérieur à un seuil d'intervalle de répétition des impulsions ($S_{PRI}$) et dont le nombre d'impulsions ($I_1$, ..., $I_m$) est inférieur à un seuil de nombre d'impulsions ($S_{impulsion}$).

**12.** Dispositif de désentrelacement de signaux radars comprenant :

- un récepteur (12) propre à recevoir des signaux électromagnétiques,
- une unité de traitement numérique du signal (23) propres à extraire les impulsions ($I_1$, ..., $I_m$) des signaux reçus par le récepteur (12), et
- un support lisible d'informations (26), sur lequel est mémorisé un programme d'ordinateur comprenant des instructions de programme, le programme d'ordinateur étant chargeable sur une unité de traitement de données (24) et adapté pour entraîner la mise en oeuvre d'un procédé selon l'une quelconque des revendications précédentes lorsque le programme d'ordinateur est mis en oeuvre sur l'unité de traitement des données (24).

**Patentansprüche**

**1.** Verfahren zur Entschachtelung von Radarsignalen, wobei das Verfahren umfasst:

- den Empfang (100) von elektromagnetischen Signalen durch einen Empfänger (12) und die Extraktion der Impulse ($I_1$, ..., $I_m$) der empfangenen Signale,
- die Bildung (110) von Impulsfolgen ($T_1$, ..., $T_n$), die mindestens drei Impulse zusammenführen, die von einem gleichen Impulswiederholintervall (PRI) beabstandet sind, wobei jede Impulsfolge ($T_1$, ..., $T_n$) durch den Impulswiederholintervall (PRI) festgelegt ist,

**dadurch gekennzeichnet, dass** das Verfahren des Weiteren umfasst:

- die Zusammenfassung (150) der Impulsfolgen ($T_1$, ..., $T_n$), die einen gleichen Impulswiederholintervall (PRI) haben, gemäß einem vorher bestimmten Zusammenfassungsgesetz, um Impulsplateaus ($P_1$, ..., $P_p$) zu bilden, und
- die Verknüpfung (180, 190) der Impulsplateaus ($P_1$, ..., $P_p$) gemäß mindestens einem vorher bestimmten Verknüpfungsgesetz, um entschachtelte Radarsignale zu erhalten, die aus der Verkettung der Impulsfolgen ($T_1$, ..., $T_n$) der verknüpften Impulsplateaus ($P_1$, ..., $P_p$) gebildet werden, wobei der Verknüpfungsschritt (180, 190) mindestens eine Zusammenfassungsphase umfasst, die gewählt wird aus:

∘ einer Phase (190) zur Zusammenfassung der Impulsplateaus ($P_1$, ..., $P_p$) von verschiedenen Impulswiederholintervallen (PRI) und die sich zeitlich verketten, um Gruppen von Impulsplateaus ($G_1$, ..., $G_g$) in Schaltung zu erhalten, und

∘ eine Phase (180) zur Zusammenfassung der Impulsplateaus ($P_1$, ..., $P_p$) von fester Trägerfrequenz, die identische Impulswiederholintervalle (PRI) haben und sich zeitlich überlappen, um Gruppen von Impulsplateaus ($G_1$, ..., $G_g$) in Überdeckung zu erhalten.

2. Verfahren nach Anspruch 1, im welchem jede Impulsfolge ($T_1$, ..., $T_n$) ebenfalls bestimmt wird durch mindestens ein Element, das aus einer Gruppe ausgewählt wird, die gebildet wird aus: der Ankunftszeit (TOA) des ersten Impulses ($I_1$) der Impulsfolge ($T_1$, ..., $T_n$), der Ankunftszeit (TOA) des letzten Impulses ($I_m$) der Impulsfolge ($T_1$, ..., $T_n$), der Frequenz der Impulse ($I_1$, ..., $I_m$) der Impulsfolge ($T_1$, ..., $T_n$), der Dauer der Impulse ($I_1$, ..., $I_m$) der Impulsfolge ($T_1$, ..., $T_n$) und der Ankunftsrichtung der Impulse ($I_1$, ..., $I_m$) der Impulsfolge ($T_1$, ..., $T_n$).

3. Verfahren nach Anspruch 1 oder 2, im welchem das Verfahren vor dem Zusammenfassungsschritt (150) einen Klassifizierungsschritt (140) der Impulsfolgen ($T_1$, ..., $T_n$) nach ihrer Trägerfrequenz umfasst, um zwei Klassen ($C_1$, $C_2$) von Impulsfolgen ($T_1$, ..., $T_n$) zu erhalten: eine Klasse ($C_1$), die die Impulsfolgen ($T_1$, ..., $T_n$) von fester Trägerfrequenz zusammenfasst, und die andere Klasse ($C_s$), die die Impulsfolgen ($T_1$, ..., $T_n$) von variabler Trägerfrequenz zusammenfasst, wobei der Zusammenfassungsschritt (150) für jede der beiden Klassen ($C_1$, $C_2$) von Impulsfolgen ($T_1$, ..., $T_n$) ausgeführt wird und es ermöglicht, Einzelfrequenz-Impulsplateaus ($P_1$, ..., $P_p$) anhand der Klasse ($C_1$) der Einzelfrequenz-Impulsfolgen ($T_1$, ..., $T_n$) und frequenzagile Impulsplateaus ($P_1$, ..., $P_p$) anhand der Klasse ($C_2$) der frequenzagilen Impulsfolgen ($T_1$, ..., $T_n$) zu erhalten.

4. Verfahren nach einem der vorstehenden Ansprüche, in welchem jedes der Zusammenfassungs- und Verknüpfungsgesetze durch mindestens einen Algorithmus ausgeführt wird, der es ermöglicht, Gruppen anhand von Elementen zu erhalten, wobei die Elemente Impulsfolgen ($T_1$, ..., $T_n$) während des Zusammenfassungsschritts und Impulsplateaus ($P_1$, ..., $P_p$) während des Verknüpfungsschritts bezeichnen, wobei die Gruppen Impulsplateaus ($P_1$, ..., $P_p$) während des Zusammenfassungsschritts und Impulsplateaugruppen ($G_1$, ..., $G_g$) während des Verknüpfungsschritts bezeichnen, wobei der Algorithmus umfasst:

die Wahl (150A) eines Referenzelements ($e_{réf}$) aus einer Gesamtheit von Elementen (E),

∘ das Entfernen (150B) des Referenzelements ($e_{réf}$) aus der Gesamtheit von Elementen (E) und das Hinzufügen, in eine Gesamtheit von Gruppen ($E_g$), einer Referenzgruppe ($g_{réf}$), die das Referenzelement ($e_{réf}$) enthält,

∘ die Auswahl (150C), in der Gesamtheit von Elementen (E), der mit der Referenzgruppe ($g_{réf}$) kompatiblen Elemente nach einer Gesamtheit von Kriterien (C), um eine Gesamtheit von Kandidatenelementen ($E_c$) zu erhalten,

∘ die Bewertung (150D) der Entfernung zwischen der Referenzgruppe ($g_{réf}$) und jedem Element der Gesamtheit von Kandidatenelementen ($E_c$),

∘ die Angliederung (150E) des Elements der Gesamtheit von Kandidatenelementen ($E_c$) unter Minimierung einer Entfernung (d) zur Referenzgruppe ($g_{réf}$) und das Entfernen des angegliederten Elements aus der Gesamtheit von Elementen (E),

∘ die Wiederholung der Auswahl- (150C), Bewertungs- (150D) und Angliederungsphasen (150E), solange wie die Gesamtheit der Kandidatenelemente ($E_c$) Elemente enthält, und

∘ die Wiederholung der Gesamtheit der vorhergehenden Phasen (150A, 150B, 150C, 150D, 150E), solange wie die Gesamtheit von Elementen (E) Elemente enthält.

5. Verfahren nach Anspruch 4, in welchem das Referenzelement ($e_{réf}$) das Element der Gesamtheit von Elementen (E) ist, dessen Ankunftszeit (TOA) des ersten Impulses ($I_1$) die geringste ist.

6. Verfahren nach Anspruch 4 oder 5, in welchem die Gesamtheit von Kriterien (C) die Kompatibilität der Elemente der Gesamtheit von Elementen (E) mit der Referenzgruppe ($g_{réf}$) in Abhängigkeit von einer oder mehreren Eigenschaften bewertet, wobei die Eigenschaften aus einer Gruppe gewählt werden, die umfasst: die Ankunftsrichtung (DOA) der Elemente, die zeitliche Überlagerung der Elemente, die Trägerfrequenz (f) der Elemente, die Impulsbreite (LI) der Elemente, den Impulswiederholintervall (PRI) der Elemente, die Phase ($\Phi$) der Elemente und die Anzahl von Impulsen der Elemente.

7. Verfahren nach einem der Ansprüche 4 bis 6, in welchem die Kriterien (C) laut Statistiken über die Eigenschaften der Radarwellenformen aus einer Datenbank ausgewählt werden.

**8.** Verfahren nach einem der Ansprüche 4 bis 7, in welchem für das Zusammenfassungsgesetz die Entfernung (d) der zeitliche Abstand ist, der den letzten Impuls ($I_n$) der Referenzgruppe ($g_{réf}$) von dem ersten Impuls ($I_1$) des Kandidatenelements der Gesamtheit von Kandidatenelementen ($E_c$) trennt, und in welchem für das Verknüpfungsgesetz die Entfernung (d) ein Überdeckungssatz zwischen der Referenzgruppe ($g_{réf}$) und dem Kandidatenelement der Gesamtheit von Kandidatenelementen ($E_c$) ist, oder ein Score, der es ermöglicht, aus der Gesamtheit von Kandidatenelementen ($E_c$) das Element auszuwählen, das die meisten gemeinsamen Eigenschaften mit der Referenzgruppe ($g_{réf}$) teilt.

**9.** Verfahren nach einem der vorstehenden Ansprüche, in welchem das Verfahren vor dem Zusammenfassungsschritt (150) einen Zurückweisungsschritt (120) der im Hinblick auf den Impulswiederholintervall (PRI) inkohärenten Impulsfolgen beinhaltet.

**10.** Verfahren nach Anspruch 9, in welchem der Zurückweisungsschritt (120) die Beseitigung der im Hinblick auf die Trägerfrequenz der Impulse inkohärenten Impulsfolgen umfasst.

**11.** Verfahren nach einem der vorstehenden Ansprüche, in welchem das Verfahren vor dem Zusammenfassungsschritt (150) einen Zurückweisungsschritt (130) der Impulsfolgen umfasst, deren Impulswiederholintervall (PRI) höher als eine Impulswiederholintervallschwelle ($S_{PRI}$) ist und deren Anzahl an Impulsen ($I_1$, ..., $I_m$) unterhalb einer Impulsanzahlschwelle ($S_{impulsion}$) liegt.

**12.** Vorrichtung zur Entschachtelung von Radarsignalen, die umfasst:

- einen Empfänger (12), der geeignet ist, elektromagnetische Signale zu empfangen, - eine digitale Verarbeitungseinheit des Signals (23), geeignet, um die Impulse ($I_1$, ..., $I_m$) der durch den Empfänger (12) empfangenen Signale zu extrahieren, und
- ein lesbarer Informationsträger (26), auf welchem ein Computerprogramm gespeichert ist, das Programmanweisungen umfasst, wobei das Computerprogramm auf eine Datenverarbeitungseinheit (24) ladbar ist und geeignet ist, um die Durchführung eines Verfahrens nach einem der vorstehenden Ansprüche zu bewirken, wenn das Computerprogramm auf der Datenverarbeitungseinheit (24) ausgeführt wird.

**Claims**

**1.** A method for deinterleaving radar signals, the method comprising:

- the reception (100) of electromagnetic signals by a receiver (12) and the extraction of the pulses ($I_1$, ..., $I_m$) from the received signals,
- the formation (110) of pulse trains ($T_1$, ..., $T_n$) grouping together at least three pulses spaced apart by a same pulse repetition interval (PRI), each pulse train ($T_1$, ..., $T_n$) being defined by the pulse repetition interval (PRI),

**characterized in that** the method further comprises:

- the grouping together (150) of the pulse trains ($T_1$, ..., $T_n$) having a same pulse repetition interval (PRI) according to a predefined grouping law in order to form pulse plateaus ($P_1$, ..., $P_p$), and
- the association (180, 190) of the pulse plateaus ($P_1$, ..., $P_p$) according to at least one predefined association law in order to obtain deinterleaved radar signals formed from the concatenation of the pulse trains ($T_1$, ..., $T_n$) of the associated pulse plateaus ($P_1$, ..., $P_p$), the association step (180, 190) comprising at least one grouping phase chosen from among:

  ○ a phase (190) for grouping together pulse plateaus ($P_1$, ..., $P_p$) having different pulse repetition intervals (PRI) and that are linked together over time in order to obtain pulse plateau groups ($G_1$, ..., $G_g$) by switching, and
  ○ a phase (180) for grouping together fixed carrier frequency pulse plateaus ($P_1$, ..., $P_p$), having identical pulse repetition intervals (PRI) and being superimposed over time to obtain pulse plateau groups ($G_1$, ..., $G_g$) by overlapping.

**2.** The method according to claim 1, wherein each pulse train ($T_1$, ..., $T_n$) is also defined by at least one element chosen from a group made up of: the time of arrival (TOA) of the first pulse ($I_1$) of the pulse train ($T_1$, ..., $T_n$), the time of

arrival (TOA) of the last pulse ($I_m$) of the pulse train ($T_1$, ..., $T_n$), the frequency of the pulses ($I_1$, ..., $I_m$) of the pulse train ($T_1$, ..., $T_n$), the duration of the pulses ($I_1$, ..., $I_m$) of the pulse train ($T_1$, ..., $T_n$) and the direction of arrival of the pulses ($I_1$, ..., $I_m$) of the pulse train ($T_1$, ..., $T_n$).

3.  The method according to claim 1 or 2, wherein before the grouping step (150), the method comprises a step (140) for classification of the pulse trains ($T_1$, ..., $T_n$) according to their carrier frequency to obtain two classes ($C_1$, $C_2$) of pulse trains ($T_1$, ..., $T_n$): one class ($C_1$) grouping together the pulse trains ($T_1$, ..., $T_n$) with a fixed carrier frequency and the other class ($C_2$) grouping together the pulse trains ($T_1$, ..., $T_n$) with a variable carrier frequency, the grouping step (150) being carried out for each of the two classes ($C_1$, $C_2$) of pulse trains ($T_1$, ..., $T_n$) and making it possible to obtain single-frequency pulse plateaus ($P_1$, ..., $P_p$) from the class ($C_1$) of the single-frequency pulse trains ($T_1$, ..., $T_n$) and frequency agile pulse plateaus from the class ($C_2$) of frequency agile pulse trains ($T_1$, ..., $T_n$).

4.  The method according to any one of the preceding claims, wherein each of the grouping and association laws is implemented by at least one algorithm making it possible to obtain groups from elements, the elements designating pulse trains ($T_1$, ..., $T_n$) during the grouping step and pulse plateaus ($P_1$, ..., $P_p$) during the association step, the groups designating pulse plateaus ($P_1$, ..., $P_p$) during the grouping step and groups of pulse plateaus ($G_1$, ..., $G_g$) during the association step, the algorithm comprising:

    ∘ choosing (150A) a reference element ($e_{réf}$) from among a set of elements (E),
    ∘ deleting (150B) the reference element ($e_{réf}$) from the set of elements (E) and adding, in a set of groups ($E_g$), a reference group ($g_{réf}$) comprising the reference element ($e_{réf}$),
    ∘ selecting (150C), in the set of elements (E), elements compatible with the reference group ($g_{réf}$) according to a set of criteria (C) to obtain a set of candidate elements ($E_C$),
    ∘ evaluating (150D) the distance between the reference group ($g_{réf}$) and each element of the set of candidate elements ($E_C$),
    ∘ annexing (150E) the element from the set of candidate elements ($E_C$) minimizing a distance (d) from the reference group ($g_{réf}$) and deleting the annexed element from the set of elements (E),
    ∘ repeating the selection (150C), evaluation (150D) and annexing (150E) phases as long as the set of candidate elements ($E_C$) comprises elements, and
    ∘ repeating all of the preceding phases (150A, 150B, 150C, 150D, 150E) as long as the set of elements (E) comprises elements.

5.  The method according to claim 4, wherein the reference element ($e_{réf}$) is the element from the set of elements (E) for which the time of arrival (TOA) of the first pulse ($I_1$) is the smallest.

6.  The method according to claim 4 or 5, wherein the set of criteria (C) evaluates the compatibility of the elements from the set of elements (E) with the reference group ($g_{réf}$) based on one or several features, the features being chosen from a group comprising: the direction of arrival (DOA) of the elements, the temporal superposition of the elements, the carrier frequency (f) of the elements, the pulse width (LI) of the elements, the pulse repetition interval (PRI) of the elements, the phase ($\Phi$) of the elements and the number of pulses of the elements.

7.  The method according to any one of claims 4 to 6, wherein the criteria (C) are chosen according to statistics on the features of the radar waveforms from a database.

8.  The method according to any one of claims 4 to 7, wherein for the grouping law, the distance (d) is the time deviation separating the last pulse ($I_n$) of the reference group ($g_{réf}$) from the first pulse ($I_1$) of the candidate elements of the set of candidate elements ($E_C$), and wherein for the association law, the distance (d) is an overlap rate between the reference group ($g_{réf}$) and the candidate element from the set of candidate elements ($E_C$) or a score making it possible to select, among the set of candidate elements ($E_C$), the elements sharing the most features in common with the reference group ($g_{réf}$).

9.  The method according to any one of the preceding claims, wherein before the grouping step (150), the method comprises a step (120) for rejecting inconsistent pulse trains in terms of pulse repetition interval (PRI).

10. The method according to claim 9, wherein the rejecting step (120) comprises the elimination of inconsistent pulse trains in terms of pulse carrier frequency.

11. The method according to any one of the preceding claims, wherein before the grouping step (150), the method comprises a step (130) for rejecting pulse trains for which the pulse repetition interval (PRI) is above a pulse repetition interval threshold ($S_{PRI}$) and for which the number of pulses ($I_1$, ..., $I_m$) is below a pulse number threshold ($S_{impulsion}$).

12. A device for deinterleaving radar signals, comprising:

- a receiver (12) able to receive electromagnetic signals,
- a signal digital processing unit (23) able to extract the pulses ($I_1$, ..., $I_m$) from the signals received by the receiver (12), and
- a readable information medium (26), on which a computer program is stored comprising program instructions, the computer program being able to be loaded on a data processing unit (24) and suitable for driving the implementation of a method according to any one of the preceding claims when the computer program is implemented on the data processing unit (24).

## FIG.1

| Réception d'une pluralité d'impulsions | — 100 |
|---|---|

↓

| Formation de trains d'impulsions | — 110 |
|---|---|

↓

| Rejet des trains d'impulsions incohérents | — 120 |
|---|---|

↓

| Rejet des trains d'impulsions en fonction de seuils | — 130 |
|---|---|

↓

| Classification des trains d'impulsions | — 140 |
|---|---|

↓

Regroupement des trains d'impulsions — 150

160 — Fréquence porteuse fixe | Fréquence porteuse variable — 170

↓

Association des paliers d'impulsions en recouvrement — 180

Association des paliers d'impulsions en commutation — 190

Fréquence porteuse fixe | Fréquence porteuse variable

200 | 210

# FIG.2

PRI$_1$

T$_1$

PRI$_2$

T$_2$

FIG.3

T$_3$

PRI$_3$

temps

PRI

LI

TOA$_{déb}$

TOA$_{fin}$

temps

FIG.4

R

P$_1$

T$_4$

T$_5$

T$_6$

temps

FIG.5

PRI

M

T$_6$

M

T$_7$

P$_2$

temps

FIG.6

150A — Choix d'un élément de référence dans un ensemble d'éléments

150B — Suppression de l'élément de référence de l'ensemble d'éléments et ajout dans un ensemble de groupes d'un groupe de référence comportant l'élément de référence

150C — Dans l'ensemble d'éléments, sélection des éléments compatibles avec le groupe de référence

150D — Evaluation de la distance entre le groupe de référence et chaque élément compatible

150E — Annexion de l'élément compatible le plus proche au groupe de référence et suppression de cet élément de l'ensemble d'éléments

Si aucun élément compatible existant

FIG.7

28

FIG.8

FIG.9

FIG.11

FIG.12

FIG.10

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110150053 A

**Littérature non-brevet citée dans la description**

- New techniques for the deinterleaving of repetitive sequences. **MARDIA H.K.** IEE Proceedings F. Communications, Radar & Signal Processing. Institution of Electrical Engineers, 01 Août 1989, vol. 136, 149-154